**Europäisches Patentamt**

**European Patent Office**

**Office européen des brevets**

(11) Veröffentlichungsnummer : **0 353 663 B1**

(12)                                    **EUROPÄISCHE PATENTSCHRIFT**

(45) Veröffentlichungstag der Patentschrift :
**13.05.92 Patentblatt 92/20**

(51) Int. Cl.⁵ : **E04F 17/02, F16L 13/10, F23J 13/04**

(21) Anmeldenummer : **89114014.7**

(22) Anmeldetag : **28.07.89**

(54) **Bausatz aus Fugendichtungen und Einzelrohren für ein Rauchgasrohr eines mehrschaligen Schornsteins und Anwendungen.**

(30) Priorität : **29.07.88 DE 3825920**

(43) Veröffentlichungstag der Anmeldung :
**07.02.90 Patentblatt 90/06**

(45) Bekanntmachung des Hinweises auf die
Patenterteilung :
**13.05.92 Patentblatt 92/20**

(84) Benannte Vertragsstaaten :
**AT CH DE FR IT LI NL**

(56) Entgegenhaltungen :
**DE-A- 1 659 540**
**DE-C- 815 253**
**DE-C- 3 317 661**
**DE-C- 3 504 446**
**DE-U- 8 606 323**
**FR-A- 2 173 373**

(56) Entgegenhaltungen :
**FR-A- 2 208 081**
**NL-C- 93 033**
**US-A- 1 823 974**
**US-A- 2 882 073**
**US-A- 3 917 285**

(73) Patentinhaber : **Schiedel GmbH & Co.**
**Lerchenstrasse 9**
**W-8000 München 50 (DE)**

(72) Erfinder : **Münz, Werner, Dipl.-Ing.**
**Weissdornweg 8**
**W-8056 Neufahrn (DE)**
Erfinder : **Wengenroth, Ulrich**
**Eichelhäherstrasse 42**
**W-8000 München 60 (DE)**

(74) Vertreter : **Dr. Elisabeth Jung Dr. Jürgen**
**Schirdewahn Dipl.-Ing. Claus Gernhardt**
**P.O. Box 40 14 68 Clemensstrasse 30**
**W-8000 München 40 (DE)**

## Beschreibung

Die Erfindung bezieht sich auf einen Bausatz aus Fugendichtungen und Einzelrohren gemäß den Merkmalen des Oberbegriffs von Anspruch 1.

Die Merkmale dieses Bausatzes sind bei einem Schornstein gemäß FR-A 21 73 373 an sich bekannt, ohne daß dabei vorgefertigte Fugendichtungen bausatzmäßig Einzelrohren zugeordnet sind. Das bekannte Rauchgasrohr, bei dem diese Fugendichtung vorgesehen ist, ist dabei ohne radiale Abstände als im ganzen mit drei Schalen versehenes ein Einzelrohr im Sinne der Erfindung bildendes Schornsteinformstück gestaltet, bei dem das eigentliche Rauchgasrohr ein Stahlrohr ist, das mit einer Wärmedämmschicht aus Vermiculite-Leichtbeton durch gegenseitige Verankerung starr verbunden und von einer ebenfalls dicht anliegenden Mantelschale umgeben ist. An der Anschlußfuge ist dabei der Stahl des Innenrohres für Verfugungszwecke mit dem nächst anschließenden Schornsteinformstück schräg nach außen gezogen und bildet die Schrägfläche einer Stufenfuge, die anschließend an diese Schrägung radial nach außen stumpf verläuft. Der stumpf radial nach außen verlaufende Bereich der Fuge erstreckt sich dabei über den Leichtbeton der mittleren Schale und die Ummantelung.

Der von dem Stahl begrenzte schräge Bereich der Fuge ist durch eine amorphe Mastix-Masse abgedichtet, während der radial weiter außen verlaufende stumpfe Bereich der Fuge durch einen ebenfalls amorphen hydraulischen Mörtel ausgefüllt ist.

Mastix und hydraulischer Mörtel sind Verfugungskomponenten mit unterschiedlichen Verfugungseigenschaften. Diese sind hier gemäß den unterschiedlichen Materialien des Schornsteinformstücks im Bereich der Fuge gewählt. Entsprechend ist es üblich, auch bei solchen Schornsteinformstücken, bei denen das Rauchgasrohr mit radialem Abstand in einem mehrschaligen Schornstein angeordnet ist, unterschiedliche Verfugungskomponenten einerseits für die Einzelrohre des Rauchgasrohres und andererseits beispielsweise für aus Leichtbeton bestehende Formstücke einer äußeren Stützummantelung zu verwenden.

Der Erfindung liegt demgegenüber eine neuartige Konzeption zugrunde, die insbesondere auch die Herstellung einschaliger und/oder dünnwandiger Rauchgasrohre, insbesondere aus Schamotte, Keramik, Glas oder Leichtbeton, einbeziehen soll.

Dieser neuartigen Konzeption liegt der Gedanke zugrunde, in dem an das Rauchgas anschließenden Fugenbereich des Rauchgasrohres radial aufeinander folgende Verfugungskomponenten mit unterschiedlichen Funktionen vorzusehen, die sich in ihren Eigenschaften möglichst zum Idealfall einer Fugendichtung ergänzen sollen.

Insbesondere, aber nicht ausschließlich, ist dabei an folgenden Sachverhalt gedacht: Konventionelle Feuerstätten erzeugen ein Rauchgas relativ hoher Temperatur. Die Schornsteine werden dabei so ausgelegt, daß eine Taupunktunterschreitung unterhalb der Mündung des Schornsteinkopfes nicht stattfinden soll. Solche Schornsteine müssen darüber hinaus gelegentlich ausgebrannt werden, wobei sehr hohe Temperaturen entstehen.

Für diesen Zweck sind hoch feuerwiderstandsfähige Verfugungskomponenten erforderlich, die jedoch in der Regel bezüglich Durchdringen von Feuchtigkeit nur unbefriedigende Eigenschaften haben. Das ist bei den konventionellen Feuerstätten aber wegen der erwähnten Taupunktbedingung auch nicht kritisch. Bei modernen Feuerstätten wird zur Verbesserung des Wirkungsgrades die Abgastemperatur demgegenüber so vermindert, daß Taupunktunterschreitungen bereits im Schornstein nicht mehr vermieden werden können. Für diesen Fall sollte als eine Hauptfunktion der Verfugungskomponente eine gute Abdichtung gegen die wegen ihres Säuregehaltes sehr aggressiven flüssigen Kondensate vorhanden sein, während der Gesichtspunkt der Feuerfestigkeit zurücktritt. Es ist bisher aber keine Verfugungskomponente bekannt, die Feuerfestigkeit einerseits und gute Abdichtwirkung gegen aggressive Flüssigkeiten andererseits optimal miteinander vereint.

Man hat daher schon Versuche gemacht, die Dichtigkeit der Fugen in einem aus Einzelrohren zusammengesetzten Rauchgasrohr anderweitig zu verbessern. So ist nach der DE A1 37 00 700 beispielsweise bekannt, in den Stirnflächen von sich zu einem einschaligen Rauchgasrohr ergänzenden Einzelrohren aus Schamotte umlaufende Nuten vorzusehen, in welche eine Edelstahlmanschette eingelegt wird. Die Fugen werden ansonsten mit einer üblichen Vermörtelung versehen. Diese Fugenausbildung setzt jedoch relativ dickwandige einschalige Rauchgasrohre voraus und bewirkt darüber hinaus keine optimale Abdichtung, da die eingelegten Edelstahlmanschetten allenfalls den Kriechweg der Feuchtigkeit durch die Fuge vergrößern, nicht jedoch den Weg für die Feuchtigkeit sperren können, sondern im Gegenteil gerade in den unteren Nuten sogar Sammelbecken für Feuchtigkeit bilden.

Auch in der DE A1 34 30 851 ist das Problem angesprochen, daß in konventioneller Weise vermörtelte Einzelrohre eines Rauchgasrohres keine hinreichende Feuchtigkeitsdichtung gegen Wasser und Wasserdampf bilden. Zur Vermeidung dieser Tatsache ist dort bei dem das innere Rauchgasrohr eines mehrschaligen Kamins bildenden Innenrohrstrang vorgesehen, daß auf der Innenseite und/oder Außenseite des Innenrohrstranges an einer Innenrohrstoßfuge eine wasser- bzw. wasserdampfundurchlässige Manschette angeordnet ist, die insbesondere aus Edelstahl oder Polytetrafluoräthylen besteht, wobei im Falle beidseitig angeordneter Manschetten diese durch die Stoßfuge hindurch durch einen gemeinsamen Steg verbunden sind. Diese die konventionelle Vermörtelung ersetzende Manschettenanordnug soll sich dabei dicht an die Innen- bzw. Außenmantelfläche der Einzelrohre anschließen und mit diesen unmittelbar über einen Klebstoff oder mittelbar über einen Klebstreifen fest verbunden sein. Eine solche Fugenüberbrückung bietet jedoch dann Probleme, wenn die Einzelrohre des Rauchgasstranges nicht formkonstant gefertigt und versetzt werden können, wie dies z.B. bei keramischen Rohren einschließlich Schamotterohren regelmäßig der Fall ist. Dann dürfte ein Klebstoff im Regelfall kaum in der Lage sein, die Formungleichmäßigkeiten zwischen den Einzelrohren und der Manschette auszugleichen, und die Verwendung von alternativ in Betracht gezogenen Klebstreifen erscheint unpraktikabel, da Klebstreifen innerhalb eines mehrschaligen Schornsteins schwer zu montieren und außerdem unzuverlässig sind. Dementsprechend ist in der DE A1 34 30 851 auch ausdrücklich angesprochen, daß die Einzelrohre und die Manschetten relativ zueinander durch ein montagemäßig sehr aufwendiges relatives Eindrehen verbunden werden sollen.

Die DE C2 33 17 661 schließlich befaßt sich mit einem Rauchgasrohr eines mehrschaligen Schornsteins, bei dem das Rauchgasrohr aus speziellen dünnwandigen keramischen Einzelrohren zusammengesetzt wird. Um dabei die Dichtwirkung konventionellen Kitts zu verbessern, ist dieser auch noch radial außerhalb des Rauchgasrohres mit Hilfe einer gesonderten Kittmanschette gehalten, wodurch der Kriechweg für Feuchtigkeit längs der Fuge verlängert wird. Damit ist jedoch den schlechten Dichtwirkungen konventionellen Kitts gegen aggressive Feuchtigkeit nicht grundsätzlich abgeholfen. Außerdem besteht die Gefahr, daß insbesondere der außerhalb des eigentlichen Rauchgasrohres von der Dichtmanschette gehaltene Mörtel unter den thermischen Bewegungen des Rauchgasrohres reißt und ausbröckelt.

Der Erfindung liegt demgegenüber die Aufgabe zugrunde, einen Bausatz aus Fugendichtungen und Einzelrohren anzugeben, bei dem die Fugenverbindung zwischen den Einzelrohren eines Rauchgasrohres auf einem andersartigen Weg geschaffen wird, der für Niedertemperaturbetrieb mit Kondensatbildung dauerhaft Feuchtigkeitsdichtigkeit gewährleistet, auch bei hohen Temperaturen einsetzbar, einfach montierbar und auch für dünnwandige einschalige Rauchgasrohre weiter ausbildbar ist.

Hierzu sieht die Erfindung einen Bausatz vor, welcher unter Verwendung der sonstigen Merkmale des Oberbegriffs von Anspruch 1 durch dessen kennzeichnende Merkmale ausgezeichnet ist.

Die Erfindung ordnet somit zunächst den schon bisher vorgefertigten Einzelrohren auch vorgefertigte Fugendichtungen bausatzmäßig zu.

Durch die Vorfertigung der Fugendichtung wird die montagemäßige Verlegung der Fugendichtung erleichtert. Ihre Ausbildung als verlorene Schalung für eine amorphe Verfugungskomponente erleichtert auch deren Anbringung in der Fuge und verbessert deren Dichtheit, da ein Hindernis gegen radiales Ausweichen der amorphen Masse unter dem Druck der aufgesetzten Rohrsäule gebildet wird. Als die amorphe Masse kann insbesondere konventioneller säurefester Kitt dienen, welcher die Ansprüche an eine Fugendichtung in Schornsteinen mit Hochtemperaturfeuerstätten erfüllt. Darüber hinaus ist die Fugendichtung selbst mit mindestens einer von ihr gebildeten Verfugungskomponente so nachgiebig ausgebildet, daß sie eine zuverlässige dauerbeanspruchbare Abdichtung gegen aggressive Flüssigkeiten und zugleich Diffusionssperre gegen aggressive Dämpfe bilden kann. Die Erfindung ermöglicht es dabei, mit derselben Ausbildung der Fugendichtung sowohl den Ansprüchen von Rauchgasrohren für Hochtemperaturfeuerungen als denen mit Niedertemperaturfeuerungen zu genügen. Darüber hinaus kann man für die einzelnen Verfugungskomponenten unter einem größeren Spektrum von Verfugungsmaterialien auswählen, ohne jeweils eine Optimierung bezüglich aller in Frage kommenden Dichtungsfunktionen anstreben zu müssen. Bisher hat man diese Funktionen im allgemeinen in einer einzigen Verfugungsmasse zu optimieren versucht.

Als die unterschiedlichen Dichtungsfunktionen, die im Rahmen der Erfindung zugleich und insgesamt besser als bisher gewährleistet werden können, seien insbesondere folgende genannt:

– hohe Druckfestigkeit, die insbesondere bei hohen Schornsteinen von Bedeutung ist;

– hohe Zugfestigkeit gegen Beanspruchungen beim Kehren des Schornsteins infolge der Möglichkeit, im Rahmen der verschiedenen Verfugungskomponenten auch solche mit guter Haftfähigkeit an den Einzelrohren auswählen zu können;

– hohe Feuchtigkeitsdichtigkeit selbst gegen aggressive Kondensate;

– hoher Dampfdiffusionswiderstand selbst gegen aggressive Dämpfe;

– hohe chemische Beständigkeit mindestens einzelner darauf ausgelegter Verfugungskomponenten;

– hohe Temperaturbeständigkeit mindestens einer angewandten Verfugungskomponente;

– hohe Abriebfestigkeit gegen Kehrbeanspruchungen;

– Dauerbeständigkeit im Betrieb mindestens einer Verfugungskomponente je nach Niedertemperatur- oder Hochtemperaturbetrieb;

– die Möglichkeit des Toleranzausgleichs von aneinander anschließenden Einzelrohren in der Fuge selbst bei relativ großen Fugenabständen infolge unterschiedlicher Schiefwinkligkeit der Fugengrenzflächen;

– zuverlässige Fugenfüllung durch kombinierte Vorfertigung und Ortsaufbringung amorpher Masse.

Die Erfindung sieht somit einen Bausatz für eine optimale multifunktionelle Fugenabdichtung vor und betrifft insbesondere einen Einsatz des Bausatzes bei der Herstellung von Rauchgasrohren in mehrschaligen Hausschornsteinen.

Eine weitere Ausbildung des erfindungsgemäßen Bausatzes für die Herstellung insbesondere von dünnwandigen einschaligen Rauchgasrohren sieht dabei vorzugsweise die Weiterbildung nach Anspruch 12 vor. Die Verlagerung mindestens einer nachgiebigen Verfugungskomponente mit Überstand an mindestens einer Seite radial über die Fuge hinaus ermöglicht es dabei, die überwiegende radiale Weite der Fuge in konventioneller Weise mit amorpher Masse zu füllen und den Außenraum des Rauchgasrohres für die Flüssigkeitsdichtung und Diffusionssperre zusätzlich nutzbar zu machen. Das ist von ganz besonderer Bedeutung bei den erwähnten sehr dünnwandigen einschaligen Rauchgasrohren, die von vornherein eine sehr geringe radiale Fugenweite haben und innerhalb dieser von gleichartigem Material der Einzelrohre begrenzt sind.

Der erfindungsgemäße Bausatz zeichnet sich außerdem durch bevorzugte Anwendbarkeit in einigen besonderen Anwendungsbereichen aus.

Außer der bereits erwähnten Herstellung einschaliger und/oder dünnwandiger Rauchgasrohre ist zunächst das Sanieren von Schornsteinen durch Neueinziehen von Rauchgasrohren zu erwähnen. Hierbei werden Einzelrohre von der Mündung des Altschornsteins mittels einer Versetzeinrichtung abgelassen, die nach Aufsetzen des Einzelrohres auf dem bereits versetzten Rauchgasrohrstrang ausgeklinkt wird. Dabei ist die zuverlässige, insbesondere feuchtigkeitsdichte, Auskleidung der Fugen in meist großem vertikalen Abstand vom Montagepersonal sehr kritisch. Dieses Problem wird durch die Verwendung der im erfindungsgemäßen Bausatz vorgesehenen vorgefertigten Fugendichtungen erheblich gemildert. Der erfindungsgemäße Bausatz schafft somit die Möglichkeit, die Sanierung so durchzuführen, daß Altschornsteine, die im allgemeinen nicht feuchtigkeitsunempfindlich ausgebildet sind, nachträglich feuchtigkeitsunempfindlich gestaltet werden können.

Im kleinen bestehen ähnliche Verhältnisse beim Einführen eines Einzelrohres in bereits höher ausgeführte Ummantelung des Rauchgasrohres am Ort der Errichtung eines neuen Schornsteins oder gar in einer Montagehalle etwa beim Einbringen von kürzeren Einzelrohren in stockwerkshohe Ummantelungen.

Dies gilt selbst dann, wenn die Einzelrohre nicht, wie konventionell, ca. 33 bis 50 cm lang sind, sondern jeweils eine Länge von mehr als 75 cm, vorzugsweise etwa 1 m, haben, oder gar noch länger ausgebildet sind. Je länger die Einzelrohre gewählt sind, desto weniger abzudichtende Fugen entstehen von vornherein desto größer ist jedoch der vertikale Abstand zwischen dem Montagepersonal und der auszubildenden Fuge.

Zweischalige Schornsteine aus einem Rauchgasrohr und einer mit Abstand zu diesem angeordneten Ummantelung sind an sich schon lange bekannt. Bei modernen Schornsteinen hat man sie jedoch durch solche dreischaliger Ausbildung ersetzt, bei denen zwischen dem Rauchgasrohr und der äußeren Stützummantelung noch eine Wärmedämmschicht angeordnet wird. Eine wesentliche Funktion dieser Wärmedämmschicht besteht dabei darin, die Unterschreitung des Taupunktes der im Rauchgas mitgeführten Dämpfe innerhalb des Schornsteins zu verhindern oder zumindest soweit wie möglich in Richtung zur Mündung des Schornsteins in die Atmosphäre zu verlagern. Im Hinblick darauf, daß die Erfindung eine zuverlässige Feuchtigkeitsabdichtung auch gegen aggressive Kondensate innerhalb des Rauchgasrohres sowie eine Diffusionssperre oder -bremse gegen entsprechende aggressive Dämpfe schafft, ermöglicht der erfindungsgemäße Bausatz sogar die Herstellung eines zweischaligen feuchteunempfindlichen Schornsteins aus dem Rauchgasrohr und einer mit Abstand zu diesem angeordneten Ummantelung mit einem Wärmedurchlaßwiderstand des Schornsteins kleiner als 0,65 m²K/W unter Verzicht auf eine gesonderte Wärmedämmschicht, solange diese nur zur Verhinderung einer Taupunktunterschreitung vorgesehen ist. Letzteres ist insbesondere bei Schornsteinen für Niedertemperaturfeuerstätten möglich.

Der erfindungsgemäße Bausatz läßt sich aber auch auf die Herstellung eines mindestens dreischaligen Schornsteins anwenden, bei dem zwischen mindestens einem Rauchgasrohr und einer Stützummantelung eine Wärmedämmschicht, insbesondere aus Mineralwolle, mit etwas Radialspiel, insbesondere mit radialem Abstand zum Rauchgasrohr, angeordnet ist. Dabei kann von vornherein dem Eindringen von Feuchtigkeit durch die Fugen zwischen den Einzelrohren des Rauchgasrohres in die Wärmedämmschicht ganz oder mindestens teilweise vorgebeugt werden. Dies bietet auch Vorteile dann, wenn zum Abführen von Restfeuchte, die aus den Fugen oder von anderen Orten, z.B. Undichtigkeiten der Einzelrohre, herrührt, der Schornstein in an sich bekannter Weise hinterlüftet ausgebildet ist.

Bei modernen Schornsteinen ist oft die Fugengrenzfläche aufeinander folgender Einzelrohre des Rauchgasstranges mit einer Stufe ausgebildet, welche von innen nach außen ansteigend ausgebildet ist. Dadurch kann man unter anderem den Kriechweg für Feuchtigkeit längs der Fuge vergrößern, was jedoch wegen der kapillaren Kräfte üblichen Fugenmörtels nur bedingt Erfolg hat. Diese und andere Funktionen einer abgestuften Fugenausbildung können durch die erfindungsgemäße Fugendichtung ersetzt werden, so daß diese es ermöglicht, in einer bevorzugten Ausgestaltung des erfindungsgemäßen Bausatzes,die fugenbildenden Stirnflächen der Einzelrohre stumpf auszubilden. Das hat auch besondere Bedeutung bei dünnwandigen Rohren, bei denen der Raum für eine abgestufte Ausbildung von vornherein nicht oder nicht im ausreichenden Maße zur Verfügung steht und bei denen insbesondere gegebenenfalls doch vorgesehene Stufen an den Fugen leicht ausbrechen können. Eine stumpfe Fuge bietet demgegenüber sogar den Vorteil, die auftretenden Druckbelastungen über den ganzen Fugenquerschnitt gleichmäßig verteilen zu können, ohne daß es zu Abscherkräften wie bei einer Stufenfuge kommt.

Andererseits ist es zweckmäßig, die Stirnflächen der Einzelrohre dort, wo sie mit einer an der Fugendichtung ausgebildeten Verfugungskomponente zusammenwirken, abgekantet, vorzugsweise abgeschrägt, auszubilden. Ein Vorteil einer solchen Ausbildung liegt beispielsweise darin, die abgekanteten Bereiche als zusätzliche Dichtflächen im Zusammenwirken mit nach Anspruch 12 radial über die Fugen überstehenden Teilen der im erfindungsgemäßen Bausatz vorgesehenen vorgefertigten Fugendichtung verwenden zu können. Außerdem wird die Zentrierung mittels zusätzlicher Zentrierungsmittel erleichtert, die außerhalb eines Einzelrohres in an sich bekannter Weise oder auch in Weiterbildung der Erfindung, worauf später noch eingegangen wird, vorgesehen sein können. Als bekannte Zentrierungsmittel seien die der DE C1 35 04 446 oder der bereits erwähnten DE C2 33 17 661 erwähnt.

Die Erfindung schafft ferner insbesondere die Möglichkeit, im Gegensatz zur bereits erwähnten Ausbildung der beiden Verfugungskomponenten der FR A2 173 373 säurefesten Fugenmörtel als amorphe Verfugungsmasse gerade in den radial innen in der Fuge angeordneten Bereichen anzuordnen, wie dies bisher durchgängig über die ganze radiale Fugenerstreckung eines Rauchgasrohres üblich ist, um hohen Temperaturen und der Beaufschlagung mit aggressiven Säuren Rechnung zu tragen. Insoweit kann der erfindungsgemäße Bausatz die konventionelle Fugentechnik durch eine eigenständige zusätzliche Abdichtung gegen aggressive Feuchtigkeit und aggressive Dämpfe ergänzen. Dabei wird innen dort, wo die hohen Temperaturen und die sauren Rauchgasbestandteile primär anfallen, eine diesen Bedingungen Rechnung tragende Verfugungskomponente eingesetzt, die zugleich die Festigkeit der Fugenverbindung gewährleisten kann, während die Abdichtfunktion gegen aggressive Feuchte und die Dämmfunktion gegen aggressive Dämpfe radial dahinter angeordnet wird und nur zur vollen Anwendung kommt, wenn es sich um Schornsteine mit Taupunktunterschreitung bereits im Rauchgasrohr handelt. In solchem Falle wird dann in Kauf genommen, daß diese Feuchtigkeit den üblichen säurefesten Fugenmörtel teilweise durchdringt. Im Falle der Anwendung in einem Schornstein mit Hochtemperaturfeuerstätte kann man es dabei sogar in Kauf nehmen, daß eine radial außen angeordnete nicht feuerfeste Verfugungskomponente im Dauerbetrieb unwirksam wird, so daß insoweit die erfindungsgemäße Fugendichtung dann praktisch auf den konventionellen Fugendichtungsfall reduziert wird. Es ist jedoch nicht mehr erforderlich, für beide Anwendungsfälle von Niedertemperaturfeuerstätten und Hochtemperaturfeuerstätten unterschiedliche Schornsteinauslegungen hinsichtlich der Fugendichtung zu wählen.

Es ist an sich möglich, die Funktion der verlorenen Schalung für mindestens eine amorphe Verfugungskomponente an der vorgefertigten Fugendichtung des Bausatzes unabhängig von der an ihr auch jeweils gebildeten vorgefertigten Verfugungskomponente auszubilden. Besonders bevorzugt ist jedoch eine Doppelfunktion einer an der Fugendichtung gebildeten Verfugungskomponente zugleich als verlorene Schalung. Das vereinfacht nicht nur den Aufbau der vorgefertigten Fugendichtung, sondern stellt sicher, daß die verlorene Schalung für die amorphe Verfugungskomponente die gesamte Höhe der Fuge einnehmen kann und daher diese voll sperrt.

Je nach der gewünschten Folge der Funktionen der unterschiedlichen Verfugungskomponenten innerhalb der Fuge, und gegebenenfalls auch im Hinblick auf die jeweils gewünschte Funktion einer verlorenen Schalung, wird man die von der vorgefertigten Fugendichtung gebildete Verfugungskomponente an der inneren oder äußeren radialen Seite der Fuge vorsehen; bevorzugt ist dabei im Hinblick auf die schon erörterte Möglichkeit des Einsatzes derselben Fugendichtung für Schornsteine mit Hoch- und mit Niedertemperaturfeuerstätte die Anwendung einer konventionellen an sich feuchtigkeitsdurchlässigen feuerfesten amorphen Verfugungskomponente radial innen und einer möglicherweise nicht so temperaturbeständigen, aber gegen Feuchtigkeit zuverlässig dichtenden Ausbildung einer vorgeformten Verfugungskomponente radial weiter außen. Die Anordnung der vorgefertigten Verfugungskomponente radial weiter außen ist auch im Hinblick auf einen radialen Überstand über die Fuge hinaus gemäß Anspruch 12 außen leichter und bequemer zu realisieren als radial innen, ohne die Anordnung mit radialem Überstand auch innen grundsätzlich ausschließen zu wollen.

Wenn im vorliegenden Zusammenhang von unterschiedlichen Verfugungskomponenten die Rede ist, sind solche mit unterschiedlichen Funktionen gemeint. Es ist also grundsätzlich auch möglich, dieselbe vorgeformte Verfugungskomponente radial innen und radial außen vorzusehen. Im Normalfall wird man jedoch wegen der unterschiedlichen Bedingungen im radial inneren und radial äußeren Fall dort unterschiedliche Verfugungskomponenten wählen. Eine Anordnung von vorgefertigten Verfugungskomponenten radial innen und radial außen kann aus verschiedenen Gründen vorgesehen sein, sei es zur entsprechenden Verteilung unterschiedlicher Dichtfunktionen, sei es zur Ausbildung einer beidseitigen verlorenen Schalung für amorphe Verfugungsmassen. Bei verlorenen Schalungen sowohl radial innen als auch radial außen ist dann auch die Aufbringung der amorphen Verfugungsmasse zwischen den beiden äußeren verlorenen Schalungen durch Ein- und Flachstreichen besonders bequem, ohne daß amorphe Masse überhaupt oder im Übermaß herausquillt. Wenn die verlorenen Schalungen dabei von nachgiebiger vorgeformter Verfugungskomponente gebildet sind, erhält man dabei zugleich unter der Kompressionslast der Einzelrohre im montierten Rauchgasrohr auch eine erwünschte Verdichtung der noch nicht erhärteten amorphen Masse.

Insbesondere für die radiale Innenseite der Fuge, aber auch allgemein, kann es zweckmäßig sein, für die verlorene Schalung auch ein zusätzliches Teil an der Fugendichtung gemäß der Erfindung vorzubilden. Das gilt insbesondere dann, wenn an einer bestimmten Seite der Fuge ein radialer Überstand vermieden werden soll. Das kann an der Innenseite der Fuge der Fall sein, wenn Überstände in unerwünschter Weise den freien Querschnitt des Rauchgasrohres oder das Kehren des Kamins behindern. An der radial äußeren Seite können Sonderfälle vorliegen, wie beispielsweise bei einer radial weiter außen eng anschließenden weiteren Schale, z.B. in Schornsteinsanierungsfällen mit von vornherein beschränktem Einbauquerschnitt in dem Altschornstein, so daß ein im Rahmen der Erfindung nach Anspruch 12 vorgesehener radialer Überstand zweckmäßig radial innen vorgesehen wird.

Die im erfindungsgemäßen Bausatz vorgesehene vorgefertigte Fugendichtung kann grundsätzlich auch mehrteilig vorgefertigt werden. Bevorzugt ist jedoch die Zusammenfassung zu einem vorgefertigten Bauteil.

Die vorgefertigte Fugendichtung des erfindungsgemäßen Bausatzes kann auch noch die Zusatzfunktion als Abstandhalter für die Fugenhöhe übernehmen. Hierfür kann man gegebenenfalls ein gesondertes Distanzstück an der Fugendichtung vorformen. Bevorzugt ist jedoch die Verwendung von hier gebildeter(n) Verfugungskomponente(n) als nachgiebiger Abstandhalter in unmittelbarer Mehrfachfunktion.

Eine von der vorgefertigten Fugendichtung des erfindungsgemäßen Bausatzes gebildete Verfugungskomponente kann nach einer in Betracht gezogenen Alternative aus üblichem elastischnachgiebigen Material bestehen. Dabei kommen beispielsweise für radial außen angeordnete vorgeformte Verfugungskomponenten gummielastische Stränge auf Naturkautschuk- oder Kunststoffbasis in Frage, die bei mindestens einer radial weiter innen angeordneten weiteren vorgeformten oder amorphen Verfugungskomponente temperaturmäßig mehr oder minder abgeschirmt sind. Dieser Abschirmungseffekt ist bei Niedertemperaturfeuerstätten ausreichend, während bei Hochtemperaturfeuerstätten dann eine allmähliche Zersetzung einer solchen vorgeformten Verfugungskomponente ohne Nachteile in Kauf genommen werden kann. Als radial innen angeordnete vorgeformte Fugendichtung bietet sich beispielsweise eine Dichtschnur aus mineralischen oder keramischen Fasern an. Unter mineralischen Fasern werden dabei insbesondere solche aus Mineralwolle, Steinwolle sowie aus Glas- und Quarzfasern in Betracht gezogen. Eine elastischnachgiebige Verfugungskomponente hat den Vorteil, daß die Dichtwirkung durch Kompression dieser Verfugungskomponente in der Fuge dauerhaft aufgrund des Gewichtes des oberhalb der Fuge montierten Rohrstranges aufgebaut wird und nach Erhärten der amorphen Fugenmasse weiter wirksam bleibt.

Die Erfindung zieht aber auch die Vorformung mindestens einer plastisch-nachgiebigen Verfugungskomponente in Betracht. Diese kann im Grenzfall nach Art eines Zahnpastastranges frei ausgelegt werden, sofern die Vorformung der Fugendichtung selbst sicherstellt, daß das Material dieser vorgeformten Verfugungskomponente nicht vorzeitig unbestimmt zerquetscht wird oder zerfließt. Das kann man beispielsweise durch gesondert vorgesehene Fugendistanzhalter erreichen.

Besonders bevorzugt ist jedoch, daß eine solche Fugendichtung von einem Stützkorsett gehalten ist, eine Maßnahme, die man im übrigen auch bei elastisch-nachgiebigen Verfugungskomponenten zusätzlich anwenden kann. Ein solches Stützkorsett verbessert die Handhabbarkeit der vorgefertigten Fugendichtung und sichert außerdem die Funktionsfähigkeit der an ihr vorgeformten Verfugungskomponente selbst dann, wenn diese vom Grundmaterial her sehr nachgiebig oder gar plastisch ist. Verschiedene Möglichkeiten eines solchen Stützkorsetts, die einzeln oder gemeinsam vorgesehen sein können, sind in den Ansprüchen 35 bis 47, 53 und 63 angegeben.

Der Querschnitt einer von der Fugendichtung gebildeten vorgeformten Verfugungskomponente kann nach Art eines konventionellen O-Ringes, oder auch des bereits erwähnten Zahnpastastranges, kreisflächenartig geformt sein. Dabei wird eine linienartige Anlage gewährleistet, die bei manchen Dichtmaterialien erwünscht ist, insbesondere elastisch-nachgiebigen. Aber auch die Verformungsarbeit der vorgeformten Dichtung bei deren Einbau in relativ engen Fugen wird dabei gegenüber rechteckartig die Fuge erfüllenden Anteilen der vorgefertigten Dichtungskomponente verringert. Dabei kann man kreisflächenartige Verfugungskomponenten relativ tief eindrücken und so bei elastischem Material den elastischen Dichtungsdruck und bei plastischem Material dessen Wechselwirkung mit den Fugengrenzflächen verbessern. Außerdem kann in zentralen Bereichen der Fuge das amorphe Material relativ weit radial nach außen bzw. nach innen reichen und so einen sehr hohen Anteil der radialen Fugenweite beaufschlagen und dadurch eine gute Kraftübertragung zwischen den benachbarten Einzelrohren gewährleisten. In nach Anspruch 12 radial überstehenden Bereichen kann man den Materialaufwand der vorgeformten Verfugungskomponente relativ klein halten. Schließlich kann man auch solche elastisch-nachgiebig vorgeformte Verfugungskomponenten leicht in einen äußeren Halteumfang eines entsprechenden Stützkorsetts einschnappen lassen. Auch haben runde Querschnitte sehr gute Formsteifigkeit gegen radiale Querkräfte.

Es kommen aber auch andere Querschnitte einer von der Fugendichtung gebildeten vorgeformten Verfugungskomponente in Frage, insbesondere quadratische oder mit radialer oder axialer Erstreckung rechteckige oder ovale Querschnitte.

Bevorzugte Bemessungsbereiche der im erfindungsgemäßen Bausatz vorgeformten Fugendichtung für den Weitenbereich der Fuge selbst sind in den Ansprüchen 15 und 16 angegeben, für den Sonderfall eines radialen Überstands nach Anspruch 12 ferner in den Ansprüchen 13 und 14. Die Bemessung nach Anspruch 14 stellt dabei einen Teilbereich von Anspruch 13 insbesondere für den Fall dar, daß der Querschnitt der von der Fugendichtung gebildeten Verfugungskomponente kreisflächenartig geformt ist; denn dann hat der radial überstehende Teil der von der Fugendichtung gebildeten Verfugungskomponente von selbst auch einen gewissen axialen Überstand über die natürliche Fugenbreite mit verschiedenen Vorteilen. Zum einen kann man diesen Überstand zur Vergrößerung des Dichtwegs längs der Fuge von radial innen nach radial außen nutzen, beispielsweise durch Anlage von Übergangsbereichen an angekanteten Ecken der Einzelrohre. Zum anderen kann man den Überstand für eine relative Einzelrohrzentrierung nutzbar oder mit anderen Zentrierungsmitteln zusammen mit nutzbar machen, etwa im Wege einer Feinzentrierung. Für die erweiterte Abdichfunktion kann man dabei gegebenenfalls die Abkantung am Rohr auch entsprechend profilieren.

Das im Anspruch 58 angegebene spezielle plastischnachgiebige Material ist dabei unter dem Gesichtspunkt noch relativ hoher Temperaturbeständigkeit ausgewählt. Die Plastizität kann dabei gemäß Anspruch 59 verbessert werden.

Die Ansprüche 60 bis 62 befassen sich mit der Besonderheit, den Dichtring nicht nur mechanisch mit den Einzelrohren bzw. Stützhülsen zu verbinden, sondern zusätzlich auch noch eine chemische Verbindung eingehen zu können, wie es an sich bei Fugenkitten möglich ist.

Es gibt Fälle, bei denen die vorgeformten Dichtungen sowie Einzelrohre des erfindungsgemäßen Bausatzes so in bezug aufeinander ausgelegt und bemessen sein können, daß auf einen radialen Überstand einer vorgeformten Verfugungskomponente im Sinne von Anspruch 12 gänzlich verzichtet werden kann. Dies gilt insbesondere für hinreichend dickwandige Einzelrohre, wie sie beispielsweise aus Schamotte oder Leichtbeton einschalig gefertigt werden.

Auch gibt es Bausituationen, bei denen ein radialer Überstand über die Außen- und Innenfläche des Rauchgasrohres nicht in Frage kommt oder mit Nebeneffekten verbunden ist, die man nicht hinnehmen möchte. In solchen Fällen ist der erfindungsgemäße Bausatz insbesondere gemäß Anspruch 20 ausgebildet, wobei bis auf den radialen Überstand nach Anspruch 12 nebst Weiterbildungen nach den Ansprüchen 13 bis 19 alle erörterten Eigenschaften des erfindungsgemäßen Bausatzes weiterhin Anwendung finden können. Besonders hervorzuheben ist dabei der Umstand, daß im Sinne von Anspruch 1 weiterhin mindestens eine vorgefertigte Verfugungskomponente in der ein- oder mehrteiligen vorgefertigten Fugendichtung des erfindungsgemäßen Bausatzes aus Fugendichtungen und Einzelrohren vorgesehen ist. Im Gegensatz zur gattungsgemäßen FR-A-2 173 373 ist dabei insbesondere an den Fall gedacht, innerhalb der von einheitlichem Material der Einzelrohre begrenzten Fuge eines einschaligen Rauchgasrohres bzw. der dieses bildenden Einzelrohre mehrere Verfugungskomponenten unterschiedlicher Eigenschaften vorzusehen, darunter außer mindestens einer amorphen Verfugungskomponente auch eine an der vorgefertigten Fugendichtung des Bausatzes ausgebildete vorgefertigte Verfugungskomponente, die insbesondere als verlorene Schalung der amorphen Verfugungskomponente(n) dienen kann (können).

Dieser Gesichtspunkt, die Fugenverbindung ohne radialen Überstand einer vorgefertigten Verfugungskomponente über die Fuge nur innerhalb derselben anzuordnen, kann dann noch im Rahmen der Ansprüche 21 bis 32 weitergebildet werden. Dieselben Weiterbildungsmaßnahmen können aber auch in Kombination mit einem radialen Überstand einer vorgeformten Verfugungskomponente an der Fugendichtung des erfindungsgemäßen Bausatzes gemäß Anspruch 12 ff. vorgesehen werden. Die Ansprüche 33 und 34 geben für diesen Fall besonders bevorzugte Weiterbildungen an.

Die Maßnahmen der Ansprüche 21 bis 32, gegebenenfalls in Verbindung mit den Ansprüchen 33 und 34, sind durch mindestens eine sich im radialen Bereich bzw. Breitenbereich der Fuge axial erstreckende vorgefertigte Verfugungskomponente an der vorgeformten Fugendichtung des erfindungsgemäßen Bausatzes gekennzeichnet, wobei in der Stirnfläche des betreffenden Einzelrohres eine jeweils dazu passende Zurücksetzung ausgebildet ist. Die Stirnflächenausbildungen der Einzelrohre und die Formgebung der vorgeformten Verfugungskomponente(n) der Fugendichtung des erfindungsgemäßen Bausatzes sind also auch in axialer Richtung aufeinander abgestimmt. Es reicht dabei im Grundsatz gemäß Anspruch 21 ein formschlüssiger Eingriff der betreffenden vorgefertigten Verfugungskomponente in die Zurücksetzung aus, während jedoch eine vollständige Ausfüllung der Zurücksetzung durch komplementäre Ausbildung bevorzugt ist.

Eine Ausbildung gemäß Anspruch 21 ff. bietet zunächst den Vorteil, die vorgefertigte Fugendichtung des erfindungsgemäßen Bausatzes auf dem letzten versetzten Einzelrohr des Rauchgasrohres zentrieren und vorzugsweise entsprechend vormontieren zu können. Dann kann bei der Montage das nächste Einzelrohr unter Zentrierung mittels der zentrierten und gegebenenfalls vormontierten Dichtung an das schon vorher versetzte Einzelrohr des schon aufgebauten Rauchgasrohres angefügt werden.

Weitere Vorteile bestehen in einer Vergrößerung der abdichtenden Fläche über die Wandstärke des Einzelrohres hinaus.

Schließlich wird die vorgeformte Verfugungskomponente durch die durch die Zurücksetzung(en) gewonnene(n) seitliche(n) Abstützung(en) vorteilhaft stabilisiert.

Es ist möglich, daß die angesprochene axiale Erstreckung der vorgeformten jeweiligen Verfugungskomponente und der zugehörigen Zurücksetzung am Einzelrohr nur in einer axialen Richtung bezüglich der Fuge vorgesehen wird. Bevorzugt ist jedoch die beidseitige axiale Erstreckung, insbesondere sogar spiegelbildlich zur Mittelebene der Fuge, im Sinne von Anspruch 24. Dann werden nämlich die angesprochenen Vorteile nicht nur verstärkt, sondern es wird auch die Möglichkeit geboten, die Einzelrohre und die Fugendichtungen invariant bezüglich ihrer Achsausrichtung montieren zu können.

Allgemein gilt, daß die Aussagen über die Anordnung der Zurücksetzung oder Zurücksetzungen an den Einzelrohren zugleich auch Aussagen über komplementäre oder wenigstens im Sinne des angesprochenen formschlüssigen Eingriffs ähnliche Gestaltungen der in die jeweilige Zurücksetzung eingreifenden vorgeformten Verfugungskomponente an der vorgeformten Fugendichtung des erfindungsgemäßen Bausatzes enthalten.

Die Fugendichtung des erfindungsgemäßen Bausatzes kann in allen Ausführungsarten zusätzlich auch noch als radialer Abstandhalter zwischen dem Rauchgasrohr und einer mit radialem Abstand folgenden äußeren Schale, vorzugsweise der Ummantelung eines zweischaligen Schornsteins, ausgebildet sein. Ein solcher radialer Abstandhalter spezieller Formgebung, der jedoch von der Ummantelung getragen ist, ist an sich aus der AT-B 384 263 bekannt.

Allgemein gilt: Bei nicht runden Einzelrohren, insbesondere rechteckigen, tritt an die Stelle der radialen Maßangaben sinngemäß eine Bezugnahme auf die Wandstärke der Einzelrohre bzw. die Richtung rechtwinklig zu deren Wand. Bevorzugt wird die erfindungsgemäße Fugendichtung jedoch in bezug auf runde Einzelrohre vorgefertigt und die Dichtringe sind dann entsprechend selbst kreisringförmig und vorzugsweise zentralsymmetrisch ausgebildet.

Es ist auch allgemein zweckmäßig, wenn vorgeformte Verfugungskomponente(n) und/oder gesonderte verlorene Schalung(en) der vorgeformten Fugendichtung aus einem Stück bestehen und ringartig geschlossen umlaufend, vorzugsweise mit gleichbleibendem Querschnitt, ausgebildet sind.

Die erfindungsgemäße vorgeformte Fugendichtung kann ganz allgemein auch ein Element eines Bausatzes bilden, das zusammen mit den auch vorgefertigten Einzelrohren und einer nachträglich aufzubringenden ein- oder mehrkomponentigen amorphen Verfugungsmasse zur Herstellung des innen liegenden Rauchgasrohres eines mehrschaligen Hausschornsteins verwendet wird. Es kommen dabei sowohl die bekannten Stirnflächenausbildungen benachbarter Einzelrohre als auch insbesondere die in den Anwendungsansprüchen 53 und 54 besonders,hervorgehobenen Stirnflächenausbildungen in Frage. Auch sind bausatzmäßig die Einzelrohre im Rahmen der Anwendungsansprüche 48 und 51 weitergebildet.

Die Erfindung wird im folgenden anhand schematischer Zeichnungen an mehreren Ausführungsbeispielen noch näher erläutert.

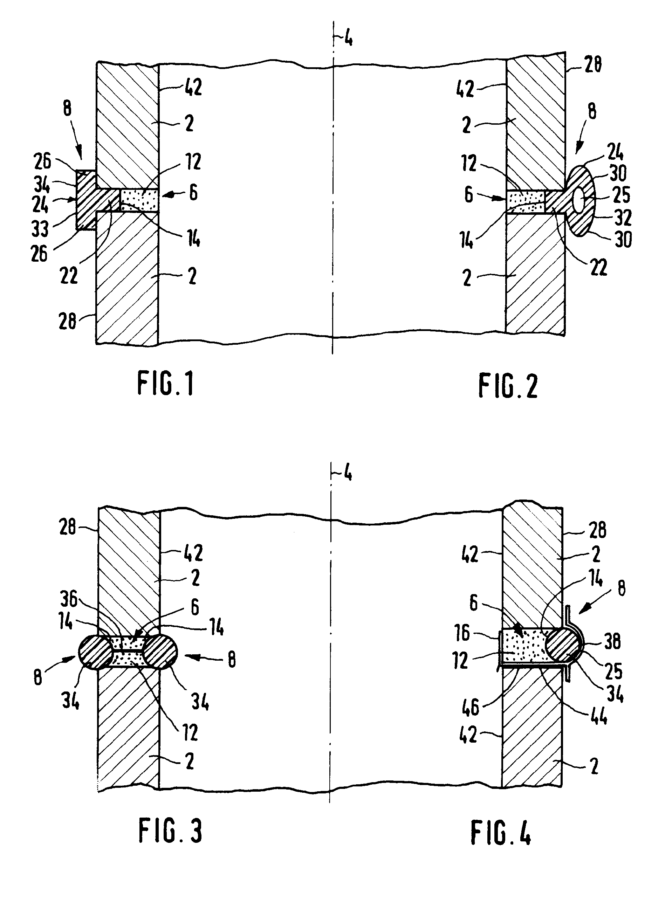

Bei allen Figuren 1 bis 16 wird dabei die Erfindung ausschnittsweise im bereits montierten Zustand veranschaulicht, bei dem die nach der Erfindung vorgesehenen vorgefertigten Fugendichtungen bereits mindestens teilweise in einer Fuge zwischen axial aneinander anschließenden einschaligen Einzelrohren angeordnet sind, welche sich zu dem entsprechenden einschaligen Rauchgasrohr eines mehrschaligen Hausschornsteins ergänzen, dessen andere(n) Schale(n) nicht dargestellt ist bzw. sind.

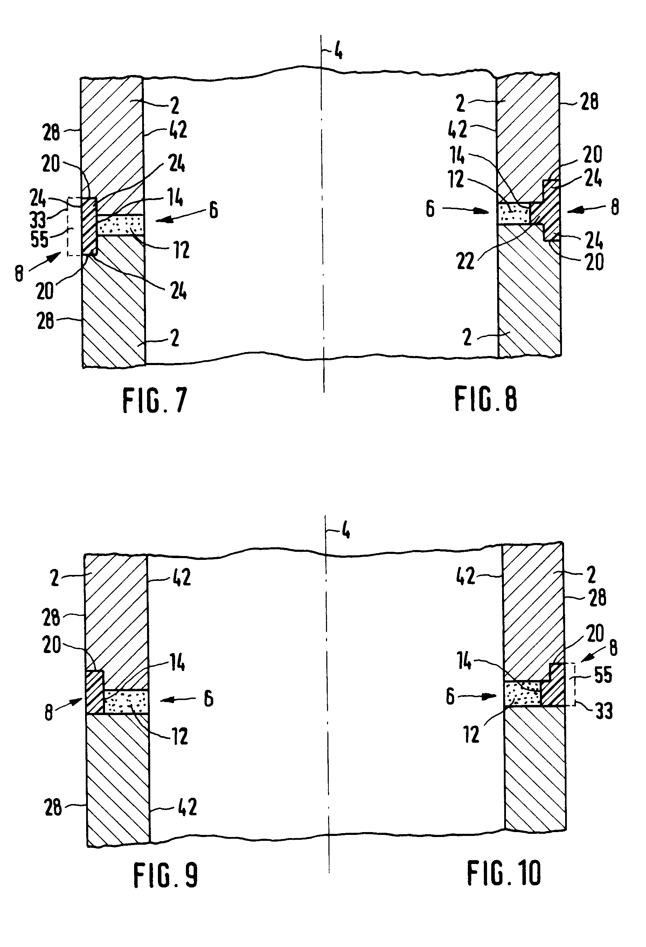

Die Fig. 1 bis 15 betreffen dabei im folgenden entsprechend fortlaufend numerierte verschiedene Ausführungsbeispiele, wobei in den Fig. 7 und 10 mit gestrichelten Phantomlinien noch zwei Varianten der entsprechenden Ausführungsbeispiele 7 und 10 eingezeichnet sind. Im ganzen sind also 15 Ausführungsbeispiele mit zwei Varianten, also insgesamt 17 Ausführungsbeispiele, dargestellt.

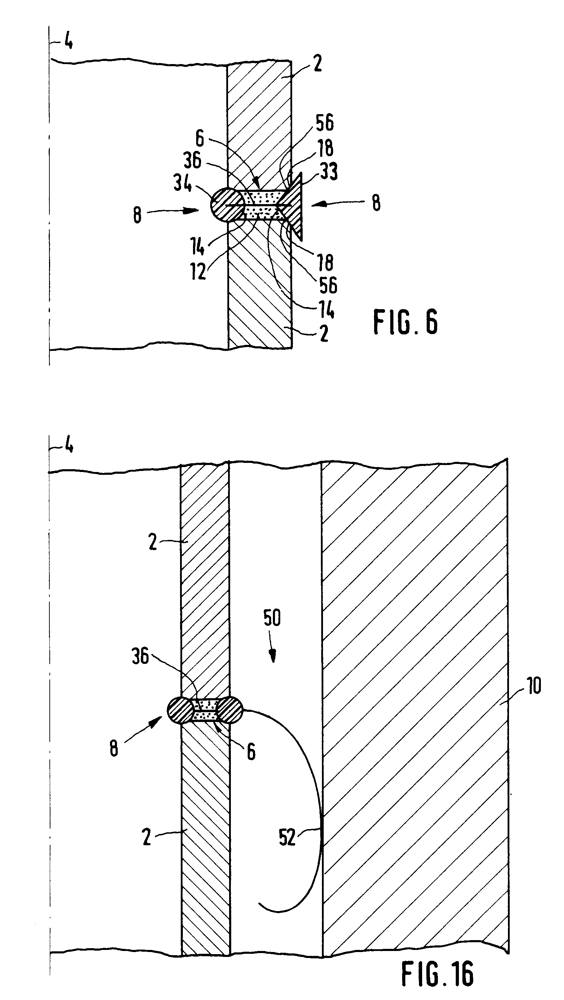

Die Fig. 16 veranschaulicht unter Bezugnahme auf das dritte Ausführungsbeispiel der Fig. 3, jedoch ohne Beschränkung der Allgemeinheit, die Ausbildung der vorgefertigten Fugendichtung in einer weiteren Ausgestaltung als Distanzhalter gegenüber einer mit radialem Abstand das Rauchgasrohr umgebenden Mantelschale eines zweischaligen Hausschornsteins, wobei in diesem Sonderfall die Mantelschale mit dargestellt ist.

Alle Figuren 1 bis 16 stellen dabei radiale Halbschnitte durch das Rauchgasrohr im Bereich der eine Fuge bildenden Enden zweier benachbarter Einzelrohre, und im Falle der Fig. 16 auch noch der den dargestellten Bereich umgebenden Ummantelung, dar.

Der Begriff "radialer Halbschnitt" bezieht sich dabei sinngemäß auf kreisrunde Einzelrohre und entsprechend kreisrunde vorgefertigte Dichtungen. Im Falle der auch in Betracht gezogenen Konfigurationen mit nicht kreisrunden Einzelrohren, insbesondere solchen mit streng oder angenähert rechteckigem Querschnitt, ist der Umfangsverlauf der Fugen und der vorgefertigten Fugendichtungen entsprechend, in den genannten Beispielen also streng oder angenähert rechteckig. In solchen Fällen ist dann der Begriff "radialer Halbschnitt" als Schnittdarstellung rechtwinklig quer zur Wand des betreffenden Einzelrohres oder Rauchgasrohres und im Falle der Darstellung von Fig. 16 der äußeren Ummantelung zu verstehen, wenn auch diese unrund ausgebildet ist.

In den Fig. 1 bis 4 und 7 bis 14 sind die Halbschnitte der entsprechend numerierten Ausführungsbeispiele dabei jeweils paarweise zusammengefaßt und mit gemeinsamer gedachter, strichpunktiert gezeichneter Achse abgebildet. Im allgemeinen ist jedoch an eine gleichartige Ausbildung der Fugenverbindung rings um das Rauchgasrohr gedacht, ohne besondere Umstände ausschließen zu wollen, in denen die Fugenverbindung längs des Umfangs der Fuge unterschiedlich gestaltet ist.

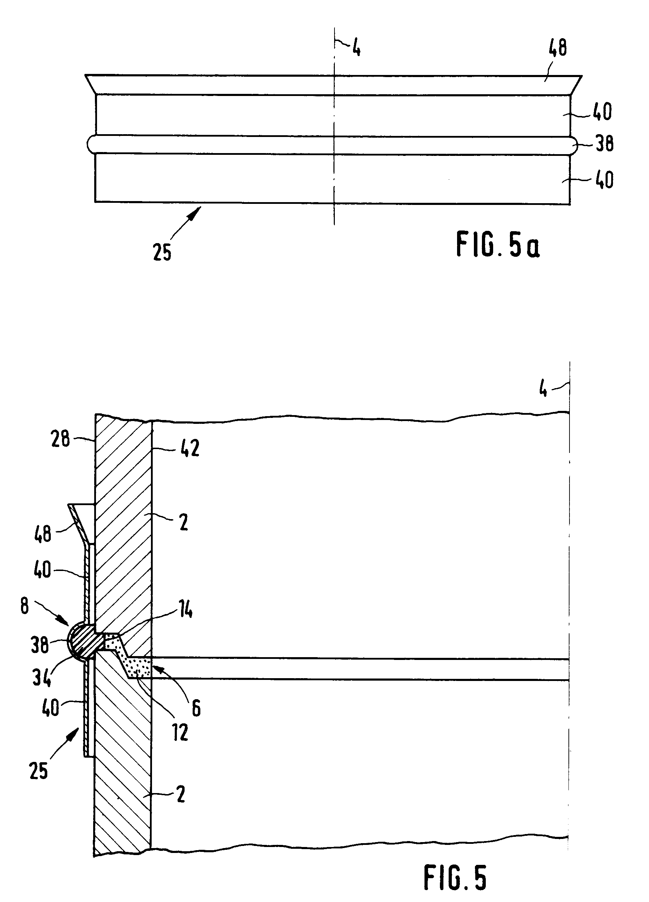

Fig. 5a schließlich stellt in verkleinertem Maßstab von 1:2 eine Draufsicht auf ein Stützkorsett in Form einer Umfangsummantelung der vorgefertigten Fugendichtung gemäß Fig. 5, die hier über die ganze Breite der Stützummantelung und nicht nur als Halbdarstellung wiedergegeben ist, dar.

Die Einzelrohre 2 haben jeweils die strichpunktiert dargestellte gedachte Achse 4 und schließen jeweils an einer Fuge 6 axial aneinander an. Mit der durchlaufenden Darstellung der Achse 4 wird deutlich gemacht, daß die Einzelrohre dabei im Idealfall längs des Rauchgasrohres fluchtend montiert werden. In der Praxis treten jedoch bei der Montage gewisse Fluchtungsfehler auf, die jedoch durch die insbesondere axiale Nachgiebigkeit mindestens einer vorgeformten Verfugungskomponente der mindestens teilweise in der Fuge angeordneten Fugendichtung 8 dichtend, insbesondere feuchtigkeitsdichtend, ausgeglichen werden kann.

Die im Bereich einer Fuge 6 aufeinander folgenden beiden benachbarten Einzelrohre 2 sind dabei jeweils mit unterschiedlicher Schrägschraffur dargestellt. Ebenso ist in Fig. 16 die Ummantelung 10 des dort ausdrücklich gezeichneten zweischaligen Schornsteins mit Schrägschraffur dargestellt. Mit dieser Schrägschraffur sollen Materialien, wie Schamotte, sonstige Keramik, Glas einschließlich Quarz oder Leichtbeton, für die Einzelrohre 2 und die üblichen Materialien einer äußeren Ummantelung eines mehrschaligen, insbesondere zweischaligen, Schornsteins, hier insbesondere Leichtbeton, besonders angesprochen sein. Es ist jedoch auch die Herstellung der Einzelrohre und/oder der Ummantelung aus anderen Materialien, insbesondere aus Stahl, nicht ausgeschlossen. Bei der Darstellung nach Fig. 16 kann ferner mindestens eine weitere nicht dargestellte Schale innen oder außen hinzugedacht werden.

Während die axiale Bemessung der Fugen 6 in bezug auf die Abmessungen der Einzelrohre, insbesondere deren Wandstärke, ohne Beschränkung der Allgemeinheit auch realistische Verhältnisse ausdrücklich mit einbeziehen, ist in Fig. 16 der Abstand zwischen dem von den Einzelrohren 2 gebildeten Rauchgasrohr und der Ummantelung 10 rein schematisch gedacht, ohne auch hier eine exakte maßstabgerechte Realisierung ausschließen zu wollen. Im Regelfall wird jedoch der betreffende Abstand in der Praxis meist kleiner ausfallen.

Die nachgiebigen vorgeformten Verfugungskomponenten der vorgeformten Fugendichtungen 8 sind jeweils mit schräger Gitterschraffur dargestellt und bilden in den Sonderfällen der Fig. 1 sowie 7 bis 12, 14 und 15 jeweils selbst die ganze vorgefertigte Fugendichtung 8.

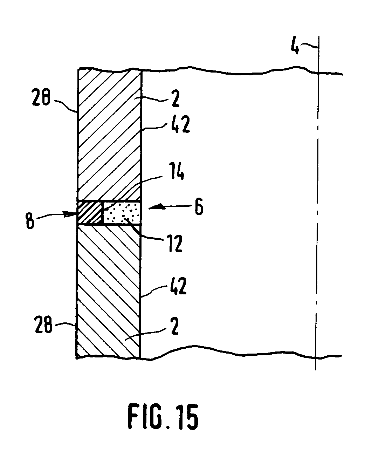

Mit Ausnahme des Sonderfalls der Fig. 14 sind ferner die vorgefertigten Verfugungskomponenten aller anderen Ausführungsbeispiele an einem gemeinsamen Baukörper vorgefertigt gezeigt.

Innerhalb der Fugen 6 ist ferner jeweils eine punktiert dargestellte amorphe aushärtende Masse 12 dargestellt, die im noch nicht erhärteten oder im erhärteten Zustand verstanden werden kann. Etwa aus der Fuge nach außen oder innen bei der Montage herausgequollene Anteile der amorphen Masse 12 sind der Einfachheit halber weggelassen. Diese kann gegebenenfalls aus mehreren radial - oder wenigstens längs des Kriechweges vom Inneren des Rauchgasrohres durch die Fuge 6 nach außen aufeinander folgenden - unterschiedlichen Verfugungskomponenten zusammengesetzt sein; insbesondere wird jedoch an die Verwendung einer einzigen amorphen aushärtenden Verfugungskomponente 12 gedacht, wie vorzugsweise säurefesten Fugenkitt.

Ein solcher säurefester Fugenkitt ist beispielsweise in Römpps Chemie-Lexikon, 7. Auflage, Band 5, Seite 3038, unter dem Stichwort "Säurekitte" näher spezifiziert.

Soweit bei den einzelnen Ausführungsbeispielen ferner die vorgeformten Verfugungskomponenten in zusammenhängender schräger Gitterschraffur dargestellt sind, ist ohne Beschränkung der Allgemeinheit insbesondere von dem Fall ausgegangen, daß es sich dabei um ein Material und nicht qualitativ um eine Zusammensetzung aus unterschiedlichen Verfugungskomponenten längs des Kriechweges durch die Fuge handelt, was aber auch in Frage kommt.

Insbesondere insoweit, als hier eine plastischnachgiebige Verfugungskomponente angesprochen ist, wird dabei an eine Fertigung aus dem Material gedacht, welches in "Gardener's Chemical Synonymes and Trade Names", 9. Auflage, Gower Technical Press, S. 141, unter dem Stichwort "Butyl Rubber" angesprochen ist. Ansonsten kommen bei allen Ausführungsbeispielen für die an der vorgeformten Fugendichtung 8 vorgeformte nachgiebige Verfugungsmasse alle früher schon erörterten elastisch-nachgiebigen und plastisch-nachgiebigen Materialien in Frage.

Soweit im Falle der Fig. 3, 6, 14 und 16 die mit schräger Gitterschraffur dargestellten vorgeformten Verfugungskomponenten getrennt voneinander angeordnet sind, kann es sich sowohl um gleiche Verfugungskomponenten, also solche mit gleichen Verfugungseigenschaften, als auch solche mit unterschiedlichen Verfugungseigenschaften handeln, wobei im letztgenannten Fall innen beispielsweise eine Ausbildung aus einem hochtemperaturfesten Material und außen aus einem weniger hochtemperaturfesten Material in Frage kommt.

Bei allen dargestellten Ausführungsbeispielen bildet ferner die an der jeweiligen Fugendichtung 8 ausgebildeten Verfugungskomponente innerhalb der Fuge 6 eine außen liegende verlorene Schalung 14 und in den Fällen der Fig. 3 einschließlich 16, 6 und 14 zusätzlich auch noch eine weitere innen liegende verlorene Schalung 14 für die amorphe Masse 12. Im Fall der Fig. 4 ist stattdessen eine innen liegende zusätzliche verlorene Schalung 16 vorgesehen, die als Bestandteil der vorgeformten Fugendichtung gesondert, aber vorzugsweise als gemeinsamer Baukörper, mit den anderen Elementen der Fugendichtung 8 vorgefertigt wird. Eine entsprechende zusätzliche verlorene Schalung 16 kann auch im Fall der Ausführungsbeispiele zusätzlich vorgesehen sein, bei denen allein eine äußere verlorene Schalung dargestellt ist oder stattdessen eine vorgeformte nachgiebige Verfugungskomponente die innere verlorene Schalung bildet.

Ebenso ist es denkbar, daß die als äußere verlorene Schalungen 14 dargestellten Fugendichtungen 8 in umgekehrter Anordnung bezüglich der Fuge auch als innere verlorene Schalungen vorgesehen werden können bzw. bei solchen Anordnungen, bei denen äußere und innere verlorene Schalungen 14 und/oder 16 vorgesehen sind, die unterschiedliche Gestaltung oder Materialien haben, die Anordnung innen und außen an der Fuge ausgetauscht wird. Dementsprechend könnte beispielsweise bei der Anordnung nach Fig. 4 die gesonderte verlorene Schalung 16 außen und die von der vorgeformten Verfugungskomponente gebildete verlorene Schalung 14 innen an der Fuge angeordnet sein oder die Formgebung der vorgefertigten Fugendichtung gemäß Fig. 6 bezüglich Anordnung innen und außen an der Fuge umgekehrt werden.

Bei den Ausführungsbeispielen der Fig. 1 bis 4, 15 und 16 sind die fugenbildenden gegenüberliegenden Stirnflächen der Einzelrohre 2 über die ganze Wandstärke stumpf ausgebildet. Fig. 5 zeigt demgegenüber eine Ausbildung mit konventioneller Stufenfuge. In Fig. 6 schließlich ist eine im wesentlichen von stumpfen gegenüberliegenden Stirnflächen der Einzelrohre 2 begrenzte Fuge 6 außen etwas erweitert, indem die gegenüberliegenden Außenkanten der Einzelrohre ohne Beschränkung der Allgemeinheit, jedoch in bevorzugter Gestaltung, mit Abschrägungen 18 versehen sind.

Die Ausbildungen der Einzelrohre 2 mit stumpfen oder mit im wesentlichen stumpfen Stirnflächen ist im Rahmen der Erfindung bevorzugt, während aber auch die Ausbildung dieser Stirnflächen in anderer Form, insbesondere mit einer konventionellen Stufenfuge nach Fig. 5, in Frage kommt. Die Ausbildung der Fugendichtungen 8, die im Zusammenhang mit stumpfen Stirnseiten der Einzelrohre dargestellt sind, können entsprechend auch bei Ausbildung der Fugen 6 als Stufenfugen vorgesehen werden, und umgekehrt.

Das Ausführungsbeispiel der Fig. 6 beschreibt dabei bereits einen Übergang in eine spezifische Weiterbildung der Stirnseiten der Einzelrohre im Rahmen nach der Erfindung gemäß den Fig. 7 bis 14, bei denen jeweils an der Fuge erfindungsspezifische axiale Zurücksetzungen 20 ausgebildet sind, in welche bei allen Ausführungsbeispielen vorgeformte Verfugungskomponenten der Fugendichtung 8 komplementär eingreifen.

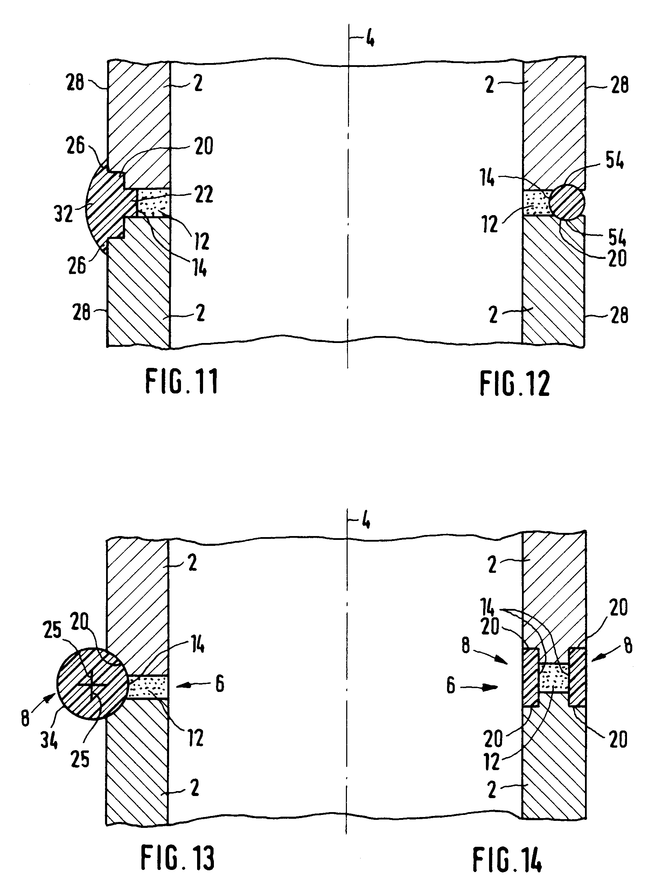

Die Ausführungsbeispiele der Fig. 1 bis 6, die phantomhaft gezeichneten Varianten der Fig. 7 und 10 sowie die Ausführungsbeispiele der Fig. 11 und 13 betreffen dabei Ausführungsformen, bei denen jeweils noch eine vorgeformte Verfugungskomponente mindestens an einer Seite der Fuge 6 radial (bzw. senkrecht zur Wand der Einzelrohre) hervorsteht,und entsprechendes gilt für die Darstellung der von Fig. 6 abgeleiteten Fig. 16.

Im sinngemäßen Übergang der Fig. 6 und speziell in den Fällen der Fig. 7 bis 14 greifen demgegenüber vorgeformte Verfugungskomponenten der Fugendichtung 8 in die erwähnten axialen Zurücksetzungen der Einzelrohre 2 komplementär ein. Bei den Ausführungsformen der Fig. 6, 11 und 13 sowie den Varianten der Fig. 7 und 10 ist dabei ein solcher axialer Eingriff mit einem zusätzlichen, insbesondere radialen, Überstand über die Fuge 6 kombiniert.

Bei allen Ausführungsbeispielen ist ohne Beschränkung der Allgemeinheit ferner die Fuge 6 im wesentlichen vollständig von vorgeformter Fugendichtung 8 und amorpher Masse 12 erfüllt; eine vorgeformte Verfugungskomponente oder eine äußere oder innere zusätzliche Schalung kann dabei auch geringfügig gegenüber der Außenfläche der Einzelrohre 2 zurückgesetzt sein, wie dies im Falle der Fig. 12 für die Verfugungskomponente nur beispielsweise angedeutet ist.

Bei den Ausführungsformen der Fig. 2 und 13 ist ferner in bezug auf einem aus der Fuge hervorstehenden Bereich vorgeformter Verfugungskomponente der Fugendichtung 6 ein inneres und im Fall der Fig. 4 und 5 ein äußeres Stützkorsett 22 für an der vorgeformten Fugendichtung 6 vorgeformte nachgiebige Verfugungskomponente dargestellt. Solche und andere früher erörterte Stützkorsette 25 können jedoch bei den genannten Ausführungsbeispielen auch weggelassen sein. Andererseits kann man auch in den Fällen, in denen kein Stützkorsett dargestellt ist, dieses zusätzlich vorsehen. Stützkorsette, die innerhalb der vorgeformten Verfugungskomponente angeordnet werden oder als Ummantelung ausgebildet sind, können in nicht dargestellter Weise dabei auch bei solchen vorgeformten Fugendichtungen vorgesehen sein, die nur innerhalb der Fuge 6 angeordnet sind. Es kann auch das Stützkorsett der Fig. 4 und 5 sinngemäß innen an der Fuge angeordnet werden, wenn dort eine vorgeformte Verfugungskomponente der Fugendichtung 8 vorgesehen ist.

Durch die Darstellung der Erfindung im bereits montierten Zustand wird besonders deutlich, wie die Fugendichtungen 8 und die Einzelrohre 2 in ihrer gegenseitigen Ausbildung und Bemessung bausatzmäßig zusammenwirken.

Nach diesen allgemeinen Betrachtungen seien nunmehr die verschiedenen dargestellten konkreten Ausführungsbeispiele im einzelnen besprochen.

Bei dem ersten Ausführungsbeispiel bildet die Fugendichtung 8 insgesamt eine einzige vorgeformte Verfugungskomponente mit einem T-förmigen Profil. Der Mittelsteg 22 dieses Profils hat rechteckigen Querschnitt und bildet dementsprechend bei einem beispielsweise runden Querschnitt der Einzelrohre einen Flachring, der von der verlorenen Schalung 14 aus, welche von dem Innenrand dieses Flachrings gebildet ist, den ganzen außen gelegenen Bereich der Fuge 6 einnimmt. Der Querbalken 24 dieses Profils schließt unmittelbar am äußeren Ende der Fuge 6 an und bildet zwei Dichtlippen 26, die jeweils dichtend mit der Außenfläche 28 des jeweiligen Einzelrohres 2 zusammenwirken. Auch der Querbalken 24 hat rechteckigen Querschnitt, vorzugsweise denselben wie der Mittelsteg 22.

Vorzugsweise sind die Längen des Mittelstegs 22 und die von dessen Verlängerung in den Querbalken 24 ausgerechneten Überstände der Dichtlippen 26 etwa gleich lang gewählt.

Dieses Grundprofil kann in mannigfacher Weise abgeändert werden, wie anhand der nachfolgenden Ausführungsbeispiele deutlich wird.

So weist das zweite Ausführungsbeispiel der Fig. 2 ebenfalls ein im großen T-förmiges Profil mit demselben Mittelsteg 22 wie beim ersten Ausführungsbeispiel auf. Der Querbalken 24 dieses Profils hat jedoch ein in Achsrichtung oval langgestrecktes Profil.

Der Dichtlippencharakter der beiden Arme 30 dieses Profils ist dabei reduziert. Gegenüber der Ausführungsform nach Fig. 1, bei der die volle Länge der Dichtlippen als zusätzliche Dichtfläche gewonnen wird, wird jedoch bei dem zweiten Ausführungsbeispiel der Vorteil gewonnen, daß die Arme 30 sich von der jeweiligen fugenbildenden Kante des Innenrohres aus axial nach außen erstrecken und so ohne Notwendigkeit eines Zusatzteils einen Zentrierungstrichter bilden.

Dessen Formsteifigkeit wird durch die zentrale Auswölbung 32 des ovalen Gesamtquerschnitts weiter verstärkt.

Mit einer entsprechenden Auswölbung 32 kann man auch die zur Außenfläche 28 parallele Außenfläche 33 des Querbalkens 24 der ersten Ausführungsform abwandeln und dabei im Grenzfall so weit gehen, daß die von dem Querbalken 24 gebildeten Dichtlippen 26 auf eine Stärke von praktisch null zurückgehen (vgl. die entsprechende Dichtlippengestalt in Fig. 11).

Bei dem zweiten Ausführungsbeispiel ist in den ovalen Querschnitt des Querbalkens 24 noch ein Stützkorsett 25 eingesetzt, das hier ohne Beschränkung der Allgemeinheit, aber in bevorzugter Weise etwa mathematisch ähnlich oval als massiver Kern geformt ist, der zentral im Querbalken mit derselben axialen Erstreckung des Ovals angeordnet ist.

Aus dem dritten Ausführungsbeispiel kann man zunächst lernen, daß es nicht erforderlich ist, daß der Mittelsteg 22 des ersten und zweiten Ausführungsbeispiels mit einem Stufenende in die Fuge ragt, wie dies bei den Fig. 1 und 2 gezeigt ist.

Vielmehr kann die Stirnfläche auch gerundet, beispielsweise kreisbogenförmig geformt, sein.

Dies wird beim dritten Ausführungsbeispiel dadurch verdeutlicht, daß die Grundform der Fugendichtung 8 die eines O-Ringes ist, dessen in die Fuge 6 weisende Kontur kreisringförmig ausgebildet ist.

Darüber hinaus ist auch die außerhalb der Fuge gelegene Kontur des O-Rings kreisringförmig geformt unter Verzicht auf die Dichtlippen 26 bzw. Arme 30 der ersten bzw. zweiten Ausführungsform.

Darüber hinaus sind sowohl an der Innenseite als auch an der Außenseite der Fuge 6 je ein O-Ring 34 vorgesehen, die durch zentral in der Fuge 6 verlaufende und über den Umfang der Fuge 6 verteilte Stege 36 zu einer Baueinheit miteinander verbunden sind. Die Stege 36 können dabei aus demselben Material der O-Ringe 34 bestehen. Vorzugsweise sind jedoch bei diesem Ausführungsbeispiel und allgemein dann, wenn derartige Stege 36 räumlich getrennte Verfugungskomponente(n) aus gleichem oder unterschiedlichem Material zu einer Baueinheit verbinden, die Stege 36 aus andersartigem Material gebildet, insbesondere aus nicht nachgiebigem abstandhaltendem Material.

Alternativ kann man auch die Stege 36 fortlassen und zwei einzelne O-Ringe 34 vorsehen.

Die bisher besprochenen drei Ausführungsbeispiele 1 bis 3 sind gemäß der zeichnerischen Darstellung vorzugsweise symmetrisch zu einer Mittelebene gestaltet, die bei den dargestellten stumpfen Fugen der Einzelrohre 2 in denselben Ausführungsbeispielen im Montagezustand zugleich die Mittelebene der Fuge 6 ist. Dies bietet den Vorteil, die vorgeformte Fugendichtung 6 invariant bezüglich ihrer Achsorientierung montieren zu können.

Eine entsprechende Symmetriebedingung kann auch bei allen anderen später noch beschriebenen Ausführungsbeispielen aus demselben Grunde gewährleistet sein, sofern nicht ausdrücklich eine unsymmetrische Ausbildungsform beschrieben wird.

Eine derartige unsymmetrische Gestaltung zeigt die vierte Ausführungsform. Bei dieser ist nur ein einziger O-Ring 34 an der Außenseite der Fuge 6 angeordnet. Mit seinem aus der Fuge 6 außen hervorstehenden Bereich greift dabei der O-Ring komplementär in eine Rille 38 mit kreisbogenförmiger Begrenzung ein, welche aus einem Flachmaterial geformt ist, das sich über und unter der Fuge mit überstehenden Randflanschen 40 fortsetzt, welche die Außenfläche 28 der beiden Einzelrohre 2 eng oder möglichst nur mit relativ kleinem gegenseitigen Abstand umgeben. Die Flansche 40 können dabei zur gegenseitigen axialen Zentrierung der an der Fuge 6 aneinander anschließenden Einzelrohre 2 mit nutzbar gemacht werden.

Insoweit kann die Fugendichtung 8 immer noch die zuvor erwähnte Symmetriebedingung erfüllen, wobei dann die Flansche 40 gleiche axiale Höhe aufweisen.

Eine Unsymmetrie ist jedoch durch die Anordnung der zusätzlichen verlorenen Schalung 16 gegeben. Diese ist etwa in Fluchtung mit der Innenfläche der aneinander anschließenden Einzelrohre 2 angeordnet und von einem aufwärts weisenden Winkel eines Winkelprofils aus Flachmaterial gebildet, dessen horizontaler Steg 44, zweckmäßig in Ausbildung mit über den Umfang verteilten und zwischen sich Freiräume für die amorphe Masse 12 bildenden Einzelstegen eine Auflagerung 46 auf der oberen Stirnseite des im Montagezustand unteren Einzelrohres 2 bildet. Diese Auflagerung 46 kann von dem Stützkorsett 25, welches durch Rille 38 und Flansche 40 gebildet ist, zu einer einstückigen Baueinheit verbunden sein. Man kann aber auch eine gesonderte Anordnung im Rahmen der vorgefertigten Fugendichtung 8 vorsehen.

In nicht dargestellter Abwandlung könnte sich der horizontale Steg 44 auch in anderer Weise in der Höhe der Fuge 6 erstrecken, beispielsweise auch schräg verlaufend und anders als dargestellt an das obere Ende der verlorenen zusätzlichen Schalung 16 angeschlossen. Dann könnte man durch eine entsprechende Abwinklung eine nur teilweise Auflagerung 46 bilden, gegebenenfalls sogar unter Anformung von Füßen. Durch derartige Ausführungsformen kann jedoch die Aufbringung der amorphen Masse 12 u.U. kompliziert werden, so daß die dargestellte Anordnung als besonders vorteilhaft angesehen wird.

In den Fig. 3 und 4 und insbesondere auch in Fig. 5 ist ferner angedeutet, daß sich die außen liegenden Ecken der Stirnfläche der Einzelrohre 2 im endgültigen Montagezustand in den jeweiligen nachgiebigen O-Ring mehr oder minder weit eindrücken können.

Insbesondere ist auch an solche Ausführungsformen gedacht, bei denen mehr als 50 % des O-Rings außerhalb der Fuge außen (und im Fall der Fig. 3 gegebenenfalls auch innen) vorstehen.

Ansonsten zeigt die Ausführungsform nach Fig. 5 den grundsätzlich gleichen Aufbau der Fugendichtung 8 wie in Fig. 4, allerdings ohne die Anordnung der zusätzlichen verlorenen Schalung 16. Andererseits ist mindestens der im Montagezustand obere Flansch 40 noch mit einem sich zusätzlich konisch nach außen erweiternden Zentrierungstrichter 48 fortgesetzt, der anders als im Fall der Fig. 2 eine Zentrierungstrichterfunktion nicht innerhalb der vorgeformten nachgiebigen Verfugungskomponente des zweiten Ausführungsbeispiels, sondern relativ starr am Stützkorsett 25 selbst ausbildet. Dadurch wird es vereinfacht, eine größere Länge zur Grobzentrierung vorzusehen. Eine Feinzentrierung kann dann immer noch an nach außen und oben ragenden Bereichen von nachgiebiger Verfugungskomponente vorgesehen sein.

Außerdem zeigt ein Vergleich der Fig. 5 und 4, daß der zusätzliche Zentrierungstrichter 48 es erleichtert, die Einzelrohre in den jeweils an den Zentrierungstrichter 48 anschließenden Flansch 40 relativ eng zentriert über eine relativ große axiale Länge einführen zu können.

Das sechste Ausführungsbeispiel wandelt die dritte Ausführungsform ab, indem an die Stelle des äußeren O-Rings 34 ein Ring mit dreieckigem Profil vorgesehen ist, wobei insbesondere das dargestellte gleichschenklige Dreieck gebildet wird. Wie beim ersten Ausführungsbeispiel ist dabei von der Basis des Dreiecks eine zur Außenfläche 28 der Einzelrohre 2 parallele Ebene gebildet, während die beiden Schenkel des Dreiecks jeweils einen geradlinig konischen Trichter an der vorgeformten Verfugungskomponente der Fugendichtung 8 selbst ausbilden. Dabei wird der Gedanke, eine Zentrierungskomponente auszubilden, von der zweiten Ausführungsform übernommen, während die gerade Trichterausbildung von der fünften Ausführungsform übernommen wird, wo diese gerade Trichterausbildung an dem Zentrierungstrichter 48 aufgezeigt ist. Es versteht sich dabei, daß dieser Zentrierungstrichter 48 an sich auch ein Zentrierungstrichter sein kann, bei dem die Zentrierungsfläche gerundet ist.

Das dreieckige Profil der sechsten Ausführungsform ist dabei nicht auf eine Weiterbildung der Fig. 3 beschränkt, sondern kann in allen anderen Fällen Anwendung finden, bei denen innen oder außen an der Fuge in anderen Ausführungsbeispielen ein O-Ring vorgesehen ist.

In Fig. 16 ist - ohne Beschränkung der Allgemeinheit - anhand der dritten Ausführungsform gezeigt, daß die vorgeformte Fugendichtung auch noch einen radialen Abstandhalter 50 des von den Einzelrohren 2 gebildeten Rauchgasrohres und einer dieses im Abstand umgebenden Ummantelung 10 tragen kann.

Der Abstandhalter 50 ist dabei in Fig. 16 von der Fugendichtung 8 aus mit Erstreckung nach unten und tiefer liegender Anlagezone 52 an der Ummantelung 10 als der Höhe der Fuge 6 gezeigt, innerhalb derer die Fugendichtung 8 angeordnet wird. Es besteht jedoch auch die manchmal sogar bevorzugte Alternative, den Abstandhalter nach oben mit höher liegender Anlagezone 52 zu orientieren. Der Abstandhalter 50 ist vorzugsweise ein Federelement, das hier in bevorzugter Gestalt etwa C-förmig dargestellt ist. Zweckmäßig sind dabei mehrere derartige Abstandhalter mit nicht zu großer Umfangserstrekkung über den Umfang der Fugendichtung 8 verteilt. Sie können beispielsweise aus Federstahlbändern bestehen und sind an ihrem einen Ende, wie dargestellt, vorzugsweise mit einer stützenden Einlage der Fugendichtung 8 verbunden. Diese ist im dargestellten Ausführungsbeispiel durch eine Verlängerung der Stege 36 durch den äußeren O-Ring 34 gebildet, wobei sich die Stege 36 aus gleichem Material wie der Abstandhalter 50 unmittelbar streifenförmig in diesen fortsetzen können. Man kann aber beispielsweise auch eine Befestigung an einem Stützkorsett 25 anderer Ausbildungsart oder an einem sonstigen, zweckmäßig nicht nachgiebigen Teil der Fugendichtung 8 vorsehen, nur beispielsweise an einer etwa außen liegenden zusätzlichen Schalung 16.

Bei allen bisher detailliert beschriebenen Ausführungsbeispielen 1 bis 6 einschließlich der Sonderform der Fig. 16 ist insbesondere auch an den Fall gedacht, daß die dargestellten einschaligen Einzelrohre 2 besonders dünnwandig ausgebildet sind.

Bei hinreichender Wandstärke, insbesondere bei Einzelrohren 2 aus Schamotte oder Leichtbeton, kommen die nachfolgend beschriebenen Ausführungsbeispiele 7 bis 15 in Betracht.

Das einfachste Ausführungsbeispiel zeigt dabei Fig. 15, bei dem die ganze Fugendichtung 8 auf den Mittelsteg 22 der Ausführungsform nach Fig. 1 reduziert ist, also auf einen nachgiebigen Flachring. Dieser erstreckt sich ebenso wie in Fig. 1 von der Außenseite der Fuge 6 in Fluchtung mit den Außenflächen 28 der Einzelrohre 2 bis zu einem Bereich innerhalb der Fugen 6, wo die Fugendichtung 8 eine verlorene Außenschalung für die amorphe Masse 12 bildet.

In nicht dargestellter Weise kann dieselbe Flachdichtung, insbesondere wenn sie aus feuerfestem Material gefertigt ist, auch anschließend an die Innenfläche 42 der Einzelrohre angeordnet oder nach dem Vorbild des Ausführungsbeispiels der Fig. 3 sowohl innen als auch außen in der Fuge angeordnet sein, und zwar sowohl zweiteilig als auch mit verbindenden Stegen 36 wiederum nach dem Vorbild der Fig. 3.

Im Falle einer konventionellen Stufenfuge nach Art der Fig. 5 sind dann zweckmäßig beim dritten und auch fünfzehnten Ausführungsbeispiel die Stege 36 im Bereich des schräg konischen Übergangs zwischen den beiden Stufen der Stufenfuge ebenfalls schräg angeordnet.

Insbesondere bei den in Fig. 15 dargestellten stumpfen Stirnflächen der aneinander anschließenden Einzelrohre kann es dabei jedoch leicht beispielsweise zu Fehlzentrierungen der vorgefertigten Fugendichtung 8 in bezug auf die Stirnflächen der Einzelrohre 2 kommen. Dies wird vermieden, wenn im Sinne des Dreieckprofils des sechsten Ausführungsbeispiels, aber im ganzen noch deutlicher, bei dem siebten bis vierzehnten Ausführungsbeispiel Zurücksetzungen in fugenbildenden Stirnflächen der Einzelrohre vorgesehen sind, in welche vorgeformte Verfugungskomponenten der Fugendichtung 8 formschlüssig eingreifen. Zugleich wird dabei auch die Abdichtungslänge in der Fuge vergrößert.

Bei dem siebten Ausführungsbeispiel wird der rechteckige Querschnitt der Fugendichtung 8 des fünfzehnten Ausführungsbeispiels beibehalten. Die vorgeformte Verfugungskomponente, welche zugleich die ganze Fugendichtung 8 bildet, ragt jedoch in stufenförmig ausgebildete Zurücksetzungen an der Außenkante der Einzelrohre hinein und bildet dabei eine Dichtungshülse, welche in Höhe des verbleibenden Teils der Fuge 6 die verlorene Schalung 14 für die amorphe Masse 12 bildet und ferner in der ausgezogen dargestellten Ausführungsform mit der Außenfläche 28 der Einzelrohre fluchtet. In der gestrichelt dargestellten Variante ist dabei noch ein Überstand 55 über die Außenfläche 28 vorgesehen bei gleichbleibendem Rechteckprofil der Fugendichtung 8. Abwandlungen dieses Rechteckprofiles etwa unter zusätzlicher Schaffung der früher erörterten Auswölbung 32 sind dabei möglich. Außerdem sind die die Fuge 6 bildenden Einzelrohre 2 bei dieser Ausführungsform achsinvariant ausgebildet, da gleichartige Zurücksetzungen 20 an beiden Enden der Einzelrohre vorgesehen werden.

Bei dem achten Ausführungsbeispiel ist die Fugendichtung 8 weiterhin in einem Bereich wie in der Hauptausführung nach Fig. 7 gebildet, wobei die Variante der Fig. 7 ebenfalls möglich ist.

Zusätzlich ist noch ein in den engen Bereich der Fuge 6 eingreifender Mittelsteg 22 nach Art des Mittelstegs des ersten Ausführungsbeispiels an der Fugendichtung als nachgiebige vorgeformte Verfugungskomponente ausgebildet, so daß im ganzen wie beim ersten Ausführungsbeispiel ein T-Profil gebildet wird. Sowohl bei der hauptsächlichen als auch bei der variierten Ausführungsform bilden dabei die Querbalken 24 der siebten und achten Ausführungsform jedoch keine Dichtlippen mit der Außenfläche 28 der Einzelrohre 2, sondern nur innerhalb der Fuge zusätzliche Dichtflächen mit der ausgebildeten Stufenfläche der abgestuften Zurücksetzung 20.

Bevorzugt ist eine Ausführungsform, bei der der Mittelsteg 22 etwa dieselbe radiale Erstreckungslänge hat wie die Stufe der Zurücksetzung 20.

Die neunte und die zehnte Ausführungsform variieren die siebte bzw. die achte Ausführungsform insofern, als an der Fuge nicht zwei komplementäre Zurücksetzungen 20 an den beiden gegenüberliegenden Stirnflächen der Einzelrohre ausgebildet sind, sondern nur an einer, hier der im Montagezustand jeweils unteren Stirnfläche.

Die Variante der Fig. 10 ist hier in bezug auf die genannte Abwandlung der Fig. 8 dargestellt, kann jedoch ebenso bei der der Fig. 9 vorgesehen sein.

Eine entsprechende Variante gilt übrigens auch bezüglich der vierzehnten Ausführungsform, welche die Ausführungsart der Fig. 7 sowohl an der Innenseite als auch an der Außenseite der Fuge vorsieht. Ähnlich können auch die Ausführungsformen der Fig. 9 und 10 sowohl an der Innenseite als auch an der Außenseite der Fuge angeordnet werden.

Nur an einer der fugenbildenden Stirnflächen der Einzelrohre 2 vorgesehene Zurücksetzungen 20 sind bevorzugt sogar im Gegensatz zur Darstellung in den Fig. 9 und 10 an der oberen Stirnfläche des im Montagezustand unteren fugenbildenden Einzelrohrs, also an der Unterseite der Fuge 6, vorgesehen. Dadurch kann man die Fugendichtung auf dem unteren Einzelrohr vormontieren und als nachgiebigeren Abstandhalter für das nächstaufzusetzende obere Einzelrohr verwenden.

Außerdem kann man bei der vierzehnten Ausführungsform die beiden gesondert vorgesehenen Bauelemente der Fugendichtung 8 auch noch in nicht dargestellter Weise über Stege nach Art der Stege 36 der Fig. 3 und 6 miteinander verbinden.

Das zwölfte Ausführungsbeispiel variiert die Idee der Fig. 7 dadurch, daß an Stelle einer Fugendichtung 8 mit rechteckigem Profil wiederum ein O-Ring 34 vorgesehen ist, welcher in eine in diesem Fall als umlaufende Ringnut 54 ausgebildete Zurücksetzung 20 an beiden gegenüberliegenden Enden der Einzelrohre 2, in nicht dargestellter Abwandlung im Sinne von Fig. 9 und 10 aber auch nur in eine Ringnut 54 an einer Stirnseite, eingreift. Dabei ist an der Außenseite der Fuge 6 eine mäßige offene Schattenfuge in bezug auf die Außenflächen 28 der Einzelrohre 2 gebildet.

Eine Verdoppelung der O-Ringe nach dem Vorbild der Fig. 3 bzw. 14 mit und ohne verbindenden Steg 36 ist auch hier möglich.

Bei den Ausführungsformen der Fig. 7 bis 10 und 14 und der nachfolgend noch beschriebenen elften Ausführungsform sind die Zurücksetzungen 20 Stufen mit rechteckigem, insbesondere quadratischem, lichten Querschnitt, so daß die in sie formschlüssig eingreifenden vorgeformten Verfugungskomponenten der Fugendichtungen 8 entsprechend rechteckige Profile zeigen.

Bei dem gerundeten O-Ring nach Fig. 12 hat dementsprechend die Ringnut 54 komplementären kreissegmentförmigen Querschnitt.

Bei der Ausführungsform der Fig. 6 bilden die mit dem dreieckigen Profil zusammenwirkenden Abschrägungen 56 der Außenkanten der Einzelrohre 2 auch schon Zurücksetzungen 20 im oben geschilderten Sinne, die dort geradlinig schräg vorgesehen sind.

Ähnliche Anschrägungen kann man auch noch zur Herstellung einer teilweisen Dichtlippenwirkung der Querbalken 24 bei der zweiten Ausführungsform vorsehen und dabei gegebenenfalls das ovale Profil mit einem dichtlippenartig wirkenden Bereich nahe dem Mittelsteg 22 und einem zentrierenden ferneren Bereich in nicht dargestellter Modifikation der zweiten Ausführungsform ausbilden.

In ähnlicher Überlegungsart kann man auch noch bei der dreizehnten Ausführungsform die an beiden Stirnseiten, in nicht dargestellter Weise gegebenenfalls auch nur an einer Stirnseite, vorgesehenen Zurücksetzungen 20 mit kreisbogenförmig profilierter Stufe ausbilden und mit einem O-Ring 34 in Eingriff bringen, der über den eigentlichen stumpf begrenzten Bereich der Fuge 6 erheblich, vorzugsweise um das Doppelte oder mehr, axial hervorsteht und außerdem radialen Überstand hat, vorzugsweise sogar mit mehr als der Hälfte außerhalb der Fuge 6 angeordnet ist. Zur Stabilisierung des relativ großen radialen Überstandes ist dabei nach dem Vorbild der Fig. 2 ein Stützkorsett 25 als Kern innerhalb des O-Ringes angeordnet. Bevorzugt ist dabei die dargestellte Versteifungsart mit einem Kern, der sternförmig aus sich axial und radial erstreckenden Stegen vorteilhaft gleicher Erstreckungsweite zusammengesetzt ist.

Man kann aber auch im Sinne von Fig. 2 einen zur kreisförmigen Umrißkontur des O-Rings 34 komplementär geformten zentralen Kern bilden, ebenso wie man einen sternförmigen Kern mit axialer sowie radialer Erstreckung auch bei der zweiten Ausführungsform vorsehen kann, wobei dann zweckmäßig die axiale Erstreckung länger gewählt wird als die radiale Erstreckung.

Die elfte Ausführungsform schließlich variiert die Fugendichtung nach Fig. 8 noch zusätzlich dadurch, daß im Sinne der Varianten der Fig. 7 und 10 noch ein zusätzlicher radialer Überstand gebildet ist, welcher nach dem Vorbild der Fig. 1 zusätzlich Dichtlippen 26 in Zusammenwirken mit der Außenfläche 28 der Einzelrohre bildet.

In schon früher angesprochener Weise sind diese Dichtlippen dabei von einer Auswölbung 32 gebildet, deren gerundete Gestalt in den äußeren Kanten der Dichtlippen 26 deren Querschnitt bis nahezu auf null reduziert.

Alternativ könnte auch eine weiter abgestufte Dichtlippenausbildung nach dem Vorbild der Fig. 1 mit Dichtlippen 26 rechteckigen Querschnitts vorgesehen sein.

Ebenso könnte die Ausführungsform nach Fig. 11 im Sinne der Fig. 9 und 10 nur auf eine Seite der Fugen in der dargestellten oder in der besprochenen nicht dargestellten Variante bezogen sein.

Schließlich ist auch eine Variante nach dem Vorbild der Fig. 7 und 9 denkbar, bei der der Mittelsteg 22 weggelassen ist, und zwar sowohl bei der dargestellten Modifikation als auch bei den besprochenen möglichen Varianten.

Im Rahmen der Erfindung werden insbesondere Wandstärken der Einzelrohre im Bereich von 5 bis 50 mm in Betracht gezogen.

Vorzugsweise ist dabei an den Bereich 10 bis 25 mm gedacht, insbesondere dann, wenn die Stirnfläche der Einzelrohre abgestuft ausgebildet ist bzw. Ausbildungsformen beschrieben sind, bei denen die Fugendichtung nicht innen oder außen über die Fuge übersteht.

Bei Überstand über die Fuge, insbesondere auch Überstand allein außen, werden insbesondere auch Wandstärken der Einzelrohre 2 von 5 bis 10 mm in Betracht gezogen, in Ausnahmefällen auch noch geringere Wandstärken, und das schließt nicht aus, einen Überstand über die Fuge auch bei größeren Wandstärken vorsehen zu können.

Die Nachgiebigkeit der vorgefertigten Verfugungskomponente ist zweckmäßig allgemein so ausgebildet, daß die Fugenhöhe unter dem Gewicht einer 1 m langen Rauchgasrohrsäule um 2 bis 25 %, vorzugsweise 5 bis 20 %, der Fugenhöhe im unbelasteten Zustand vermindert wird. Unter Fugenhöhe im unbelasteten Zustand wird dabei der Zustand angesprochen, bei dem ein Einzelrohr auf die schon in der späteren Fuge angeordnete vorgefertigte Fugendichtung aufgesetzt wird, diese aber im Bereich der Fuge noch nicht belastet ist. Es besteht dann bereits ein Eingriff zwischen den Einzelrohren und der zwischen ihnen angeordneten Fugendichtung, jedoch noch ohne Belastung derselben. Bei der Bemessung der Nachgiebigkeit wird von einem Zustand ausgegangen, bei dem in der Fuge noch keine amorphe Masse eingebracht ist. Durch entsprechende Formgebung der vorgefertigten Verfugungskomponente kann in vorteilhafter Weise erreicht werden, daß mit zunehmender Höhe der Rauchgassäule die Zusammendrückung der Fuge weniger als proportional ist, so daß z.B. bei Aufbau hoher Rauchgasrohre weniger noch nicht erhärtete amorphe Masse aus der Fuge herausquillt, die man nur in beschränkter axialer Reichweite abstreichen kann. Vorzugsweise werden Fugenhöhen im endgültigen Bauzustand mit erhärteter amorpher Masse zwischen 3 und 10 mm ausgebildet.

## Patentansprüche

1. Bausatz aus Fugendichtungen (8) und Einzelrohren (2) zur Herstellung einer Fugenverbindung zwischen den sich zu einem Rauchgasrohr eines mehrschaligen Schornsteins axial ergänzenden Einzelrohren (2) mit einer in den Fugen (6) angeordneten Verfugungsmasse, die innerhalb der Fuge (6) mindestens in zwei radial aufeinander folgende Verfugungskomponenten mit unterschiedlichen Verfugungseigenschaften unterteilt ist, wobei mindestens eine Verfugungskomponente eine amorphe aushärtende Masse (12) ist, gekennzeichnet durch vorgefertigte Fugendichtungen (8), die mindestens eine nachgiebige Verfugungskomponente und innerhalb der Fuge (6) eine verlorene Schalung (14) für mindestens eine amorphe Verfugungskomponente (12) der Fugenverbindung bilden, wobei die Verfugungskomponenten (8,12) in einem radial innen liegenden Bereich auf Temperaturfestigkeit und in einem radial außen liegenden Bereich auf Feuchtigkeitsdichtheit bei niederen Temperaturen ausgelegt sind.

2. Bausatz nach Anspruch 1, dadurch gekennzeichnet, daß die von der Fugendichtung (8) gebildete nachgiebige Verfugungskomponente zugleich die verlorene Schalung (14) bildet.

3. Bausatz nach Anspruch 1 oder 2, dadurch gekennzeichnet, daß die von der Fugendichtung (8) gebildete Verfugungskomponente nur an einer radialen Seite der Fuge (6), vorzugsweise der radial äußeren Seite, vorgesehen ist.

4. Bausatz nach Anspruch 1 oder 2, dadurch gekennzeichnet, daß die von der Fugendichtung (8) gebildete(n) Verfugungskomponente(n) an den radial inneren und äußeren Seiten der Fuge (6) vorgesehen ist (sind).

5. Bausatz nach Anspruch 3, dadurch gekennzeichnet, daß für die andere radiale Seite der Fuge (6) eine zusätzliche verlorene Schalung (16) vorgesehen ist.

6. Bausatz nach einem der Ansprüche 1 bis 5, dadurch gekennzeichnet, daß die von der Fugendichtung (8) gebildete(n) Verfugungskomponente(n) und gegebenenfalls zusätzliche verlorene(n) Schalung(en) (16) zu einem vorgefertigten Bauteil zusammengefaßt sind.

7. Bausatz nach einem der Ansprüche 1 bis 6, dadurch gekennzeichnet, daß die Fugendichtung (8) als Abstandhalter für die Fugenhöhe ausgebildet ist.

8. Bausatz nach Anspruch 7, dadurch gekennzeichnet, daß von der Fugendichtung (8) gebildete Verfugungskomponente(n) als nachgiebiger Abstandhalter vorgesehen ist (sind).

9. Bausatz nach einem der Ansprüche 1 bis 8, dadurch gekennzeichnet, daß von der Fugendichtung (8) gebildete Verfugungskomponente(n) elastisch-nachgiebig ist (sind).

10. Bausatz nach einem der Ansprüche 1 bis 9, dadurch gekennzeichnet, daß von der Fugendichtung (8) gebildete Verfugungskomponente(n) plastisch-nachgiebig ist (sind).

11. Bausatz nach einem der Ansprüche 1 bis 10, dadurch gekennzeichnet, daß der Querschnitt der von der Fugendichtung (8) gebildeten Verfugungskomponente kreisflächenartig geformt ist.

12. Bausatz nach einem der Ansprüche 1 bis 11, dadurch gekennzeichnet, daß die Fugendichtung (8), vorzugsweise eine von ihr gebildete Verfugungskomponente, mindestens an einer Seite radial über die Fuge (6) vorsteht.

13. Bausatz nach Anspruch 12, dadurch gekennzeichnet, daß der radial überstehende Teil der von der Fugendichtung (8) gebildeten Verfugungskomponente 40 bis 80 %, vorzugsweise über 50 %, von deren radialer Breite ausmacht.

14. Bausatz nach Anspruch 12 oder 13, dadurch gekennzeichnet, daß der radial überstehende Teil der von der Fugendichtung (8) gebildeten Verfugungskomponente 60 bis 80 % von deren radialer Breite ausmacht.

15. Bausatz nach einem der Ansprüche 12 bis 14, dadurch gekennzeichnet, daß die radiale Weite der Fuge (6), welche von einer nur an einer Seite der Fuge angeordneten, von der Fugendichtung (8) gebildeten Verfugungskomponente eingenommen wird, 10 % bis 50 % der radialen Fugenbreite ausmacht.

16. Bausatz nach einem der Ansprüche 12 bis 14, dadurch gekennzeichnet, daß die radiale Weite der Fuge (6), welche von an beiden Seiten der Fuge angeordneter (oder angeordneten) Verfugungskomponente(n) eingenommen wird, 10 % bis 1/3 der radialen Fugenbreite ausmacht.

17. Bausatz nach einem der Ansprüche 12 bis 16, dadurch gekennzeichnet, daß der radial überstehende Teil der von der Fugendichtung (8) gebildeten Verfugungskomponente mindestens in einer axialen Richtung, vorzugsweise in beiden, mit einem axialen Überstand gegenüber dem innerhalb der Fuge (6) angeordneten Bereich ausgebildet ist.

18. Bausatz nach Anspruch 17, dadurch gekennzeichnet, daß der Überstand eine am Umfang des jeweiligen Einzelrohres im Einbauzustand zur Anlage kommende Lippendichtung (26) bildet.

19. Bausatz nach Anspruch 17 oder 18, dadurch gekennzeichnet, daß der Überstand eine axial ausgerichtete oder sich vorzugsweise trichterartig erweiternde Zentrierung für das jeweilige Einzelrohr (2) bildet.

20. Bausatz nach einem der Ansprüche 1 bis 11, dadurch gekennzeichnet, daß die Außenweite der vorgefertigten Fugendichtung (8) kleiner oder gleich der Außenweite der Einzelrohre (2) und die Innenweite der vorgefertigten Fugendichtung (8) größer oder gleich der Innenweite der Einzelrohre (2) ist.

21. Bausatz nach einem der Ansprüche 1 bis 20, dadurch gekennzeichnet, daß die Stirnflächen der Einzelrohre (2) mit axialen Zurücksetzungen (20) ausgebildet sind, in welche die Fugendichtungen (8) formschlüssig, vorzugsweise komplementär, eingreifen.

22. Bausatz nach Anspruch 21, dadurch gekennzeichnet, daß die axialen Zurücksetzungen (20) als umlaufende Stufe(n) oder Ringnut(en) (54) ausgebildet sind.

23. Bausatz nach Anspruch 21 oder 22, dadurch gekennzeichnet, daß die Zurücksetzungen (20) nur an einem der beiden Enden der Einzelrohre (2) ausgebildet sind.

24. Bausatz nach einem der Ansprüche 21 bis 23, dadurch gekennzeichnet, daß die Zurücksetzungen (20) an beiden Enden der Einzelrohre (2) gleich ausgebildet sind.

25. Bausatz nach einem der Ansprüche 21 bis 24, dadurch gekennzeichnet, daß die Zurücksetzungen (20) als Stufen nur an der Innenseite oder vorzugsweise der Außenseite der Stirnfläche der Einzelrohre (2) ausgebildet sind.

26. Bausatz nach einem der Ansprüche 21 bis 25, dadurch gekennzeichnet, daß der lichte Querschnitt der Zurücksetzungen (20) rechteckig ist.

27. Bausatz nach einem der Ansprüche 21 bis 25, dadurch gekennzeichnet, daß der lichte Querschnitt der Zurücksetzungen (20) gerundet ist.

28. Bausatz nach einem der Ansprüche 21 bis 27, dadurch gekennzeichnet, daß die radiale Weite nur einer Zurücksetzung (20) einer Stirnfläche 20 bis 50 %, vorzugsweise 20 bis 35 %, der Wandstärke des Einzelrohres (2) ausmacht.

29. Bausatz nach einem der Ansprüche 21 bis 27, dadurch gekennzeichnet, daß die radiale Weite von zwei Zurücksetzungen (20) an derselben Stirnfläche 20 bis 35 % der Wandstärke des Einzelrohres (2) ausmacht.

30. Bausatz nach einem der Ansprüche 21 bis 29, dadurch gekennzeichnet, daß die Zurücksetzung (20) 3 bis 10 mm Tiefe hat.

31. Bausatz nach einem der Ansprüche 20 bis 30, dadurch gekennzeichnet, daß die Fugendichtung (8) eine Dichthülse mit konstanter Wandstärke bildet (Fig. 7-10, 14 und 15).

32. Bausatz nach einem der Ansprüche 8 bis 31, dadurch gekennzeichnet, daß die Fugendichtung (8) einen winkelförmigen Querschnitt aufweist, dessen einer Schenkel in die Zurücksetzung (20) eingreift und dessen anderer Schenkel (22) einen nachgiebigen Abstandhalter für die Fugenhöhe bildet.

33. Bausatz nach einem der Ansprüche 12 bis 19 und 21 bis 32, dadurch gekennzeichnet, daß die Fugendichtung (8) mitsamt ihrem in eine oder mehrere Zurücksetzung(en) (20) eingreifenden Bereich radial über die Fuge (6) übersteht.

34. Bausatz nach Anspruch 33, dadurch gekennzeichnet, daß an einem in eine äußere Stufe (20) der Stirnseite des Einzelrohres (2) eingreifenden Bereich der Fugendichtung (20) eine an der Außenfläche (28) des Einzelrohres (2) angreifende Dichtlippe (26) anschließt (Fig. 11).

35. Bausatz nach einem der Ansprüche 1 bis 34, dadurch gekennzeichnet, daß von der Fugendichtung (8) gebildete Verfugungskomponente(n) von einem Stützkorsett (25) gehalten ist (sind).

36. Bausatz nach Anspruch 35, dadurch gekennzeichnet, daß das Stützkorsett (25) einen in der jeweiligen Verfugungskomponente eingebetteten Tragkörper aufweist.

37. Bausatz nach Anspruch 34 oder 36, dadurch gekennzeichnet, daß das Stützkorsett (25) eine die jeweilige Verfugungskomponente durchziehende Stützstruktur aufweist.

38. Bausatz nach Anspruch 37, dadurch gekennzeichnet, daß die Stützstruktur (25) eine beigemengte Fasermatrix aufweist.

39. Bausatz nach einem der Ansprüche 35 bis 38, dadurch gekennzeichnet, daß das Stützkorsett (25) eine die jeweilige Verfugungskomponente umschließende, vorzugsweise luftdurchlässige, Hülle ist.

40. Bausatz nach Anspruch 39, dadurch gekennzeichnet, daß die Hülle für in ihr angeordnete nachgiebig plastische Dichtmasse durchlässig bzw. für in ihr angeordnete elastischnachgiebige Dichtmasse bei Kompression durchdringbar ausgebildet ist.

41. Bausatz nach einem der Ansprüche 35 bis 40, dadurch gekennzeichnet, daß das Stützkorsett (25) eine den radial überstehenden Teil der von der Fugendichtung (8) gebildeten Verfugungskomponente formschlüssig umschließende Umfangsummantelung (38,40) aufweist.

42. Bausatz nach Anspruch 41, dadurch gekennzeichnet, daß die Umfangsummantelung (38,40) von einem die Verfugungskomponente rinnenförmig (38) umschließend geformten Flachmaterial gebildet ist.

43. Bausatz nach Anspruch 41 oder 42, dadurch gekennzeichnet, daß die Umfangsummantelung (38,40) mindestens in einer axialen Richtung, vorzugsweise in beiden, einen axialen Überstand (40) über die von ihr gestützte Verfugungskomponente (34) aufweist.

44. Bausatz nach Anspruch 43, dadurch gekennzeichnet, daß der jeweilige axiale Überstand (40) der Umfangsummantelung (38,40) 20 bis 50 mm beträgt.

45. Bausatz nach Anspruch 43 oder 44, dadurch gekennzeichnet, daß der im Einbauzustand der Einzelrohre (2) axiale Überstand der Umfangsummantelung (38,40) als Zentrierungstrichter (48) ausgebildet ist.

46. Bausatz nach einem der Ansprüche 43 bis 45, dadurch gekennzeichnet, daß der axiale Überstand (40) gegenüber der Außenfläche (28) des jeweiligen Einzelrohres (2) einen radialen Abstand von 1 bis 3 % des Außendurchmessers des Nennmaßes des Einzelrohres hat und sich gegebenenfalls im Zentrierungstrichter (48) auf maximal 10 % erweitert.

47. Bausatz nach einem der Ansprüche 35 bis 46, dadurch gekennzeichnet, daß das Stützkorsett (25) eine zusätzliche verlorene Schalung (16) für die entgegengesetzte Seite der Fuge (6) trägt.

48. Bausatz nach einem der Ansprüche 5 bis 32, dadurch gekennzeichnet, daß die zusätzliche verlorene Schalung (16) von einer etwa fugenhohen und etwa die Innenfläche (42) der benachbarten Einzelrohre (2) fortsetzenden dünnwandigen Hülse gebildet ist.

49. Bausatz nach einem der Ansprüche 5 bis 48, dadurch gekennzeichnet, daß die zusätzliche verlorene Schalung (16) mit einer Auflagerung (46) auf der oberen Stirnseite des unteren fugenbildenden Einzelrohres (2) versehen ist.

50. Bausatz nach einem der Ansprüche 1 bis 49, dadurch gekennzeichnet, daß die zusätzliche verlorene Schalung (16) von über den Umfang verteilten Tragstegen (44) mit dem Stützkorsett verbunden ist.

51. Bausatz nach einem der Ansprüche 1 bis 50, dadurch gekennzeichnet, daß die von der Fugendichtung (8) gebildete Verfugungskomponente einen T-förmigen Querschnitt hat, vorzugsweise insgesamt T-förmig geformt ist.

52. Bausatz nach einem der Ansprüche 1 bis 51, dadurch gekennzeichnet, daß die von der Fugendichtung (8) gebildete Verfugungskomponente eine in die Fuge ragende Flachdichtung mit einem nach oben und unten langgestreckt gerundeten axialen und radialen Überstand bildet, vorzugsweise insgesamt entsprechend geformt ist.

53. Bausatz nach Anspruch 52, dadurch gekennzeichnet, daß der axiale und radiale Überstand mit einem ähnlich geformten Kern als Stützkorsett (25) ausgebildet ist.

54. Bausatz nach einem der Ansprüche 1 bis 53, dadurch gekennzeichnet, daß die von der Fugendichtung (8) gebildete(n) Verfugungskomponente(n) zwei an der Außen- und Innenseite der Fuge (6) anordbare Ringdichtungen - vorzugsweise mit kreisartigem Querschnitt (34) - bilden, welche durch über den Umfang verteilte Stege (36) miteinander verbunden oder mehrteilig vorgesehen sind.

55. Bausatz nach einem der Ansprüche 1 bis 54, gekennzeichnet durch Ausbildung der Fugendichtung (8) mit einem radialen Abstandhalter (50) zwischen dem Rauchgasrohr (2) und einer mit radialem Abstand folgenden äußeren Schale, vorzugsweise der Ummantelung (10) eines zweischaligen Schornsteins.

56. Bausatz nach einem der Ansprüche 1 bis 55, dadurch gekennzeichnet, daß eine von der Fugendichtung (8) gebildete Verfugungskomponente von einer Dichtschnur aus mineralischen oder keramischen Fasern gebildet ist.

57. Bausatz nach einem der Ansprüche 1 bis 56, dadurch gekennzeichnet, daß eine von der Fugendichtung (8) gebildete Verfugungskomponente von einem gummielastischen Strang auf Naturkautschuk- oder Kunststoffbasis gebildet ist.

58. Bausatz nach einem der Ansprüche 1 bis 57, dadurch gekennzeichnet, daß eine von der Fugendichtung (8) gebildete Verfugungskomponente von einem plastisch-nachgiebigen Strang auf Naturkautschuk- oder Kunststoffbasis, vorzugsweise auf Basis eines Copolymers von Isobutylen mit einem kleinen prozentualen Anteil an Dien, vorzugsweise Butadien, gebildet ist.

59. Bausatz nach Anspruch 58, dadurch gekennzeichnet, daß der Strang mit mineralischen, vorzugsweise silikathaltigen, Füllstoffen versehen ist.

60. Bausatz nach einem der Ansprüche 1 bis 59, dadurch gekennzeichnet, daß eine von der Fugendichtung (8) gebildete Verfugungskomponente mit einem Zusatz versehen ist oder aus einem Material besteht, das sich bei Hinzufügung eines Aktivators mit dem Material der Einzelrohre chemisch verbindet.

61. Bausatz nach Anspruch 60, dadurch gekennzeichnet, daß der Zusatz oder das Material ein säurefester Kitt und der Aktivator Wasser oder Wasserglas ist.

62. Bausatz nach Anspruch 60 oder 61, dadurch gekennzeichnet, daß das Material als Pulver oder Granulat von einer durchlässigen Hülle - vorzugsweise ein Gewebe, Gewirke oder Gestricke - gehalten ist.

63. Bausatz nach einem der Ansprüche 35 bis 62, dadurch gekennzeichnet, daß das Stützkorsett (25) aus Metall, vorzugsweise nichtrostender Stahl oder Aluminium, Kunststoff, vorzugsweise Polytetrafluoräthylen, oder Carbon-, Kermamik- oder Mineralfasermaterial besteht.

64. Bausatz nach einem der Ansprüche 1 bis 63, dadurch gekennzeichnet, daß die Einzelrohre (2) einschalig und/oder dünnwandig ausgebildet sind, vorzugsweise aus Schamotte, Keramik, Glas oder Leichtbeton.

65. Bausatz nach einem der Ansprüche 1 bis 64, dadurch gekennzeichnet, daß die Einzelrohre (2) jeweils eine Länge von mehr als 75 cm, vorzugsweise etwa 1 m, haben.

66. Bausatz nach einem der Ansprüche 20 oder 33 bis 65, dadurch gekennzeichnet, daß die fugenbildenden Stirnflächen der Einzelrohre (2) stumpf ausgebildet sind.

67. Bausatz nach einem der Ansprüche 1 bis 66 mit der Maßgabe, daß die Stirnflächen der Einzelrohre (2) an der Seite, wo sie mit einer an der Fugendichtung (8) ausgebildeten Verfugungskomponente zusammenwirken, abgekantet, vorzugsweise abgeschrägt, ausgebildet sind.

68. Anwendung eines Bausatzes nach einem der Ansprüche 1 bis 67 für das Sanieren von Schornsteinen durch Neueinziehen von Rauchgasrohren.

69. Anwendung eines Bausatzes nach einem der Ansprüche 1 bis 67 oder Anwendung nach Anspruch 68 beim Einführen eines Einzelrohres (2) in bereits höher ausgeführte Ummantelung (10) des Rauchgasrohres.

70. Anwendung eines Bausatzes nach einem der Ansprüche 1 bis 67 oder Anwendung nach Anspruch 68 oder 69 auf die Herstellung eines zweischaligen Schornsteins aus dem Rauchgasrohr (2) und einer mit Abstand zu diesem angeordneten Ummantelung (10) mit einem Wärmedurchlaßwiderstand des Schornsteins kleiner als 0,65 m²K/W.

71. Anwendung eines Bausatzes nach einem der Ansprüche 1 bis 67 oder Anwendung nach einem der Ansprüche 68 bis 70 auf einen radial innen in der Fuge (6) angeordneten säurefesten Fugenmörtel als amorphe Verfugungsmasse (12).

72. Anwendung eines Bausatzes nach einem der Ansprüche 1 bis 67 oder Anwendung nach einem der Ansprüche 68, 69 oder 71 auf die Herstellung eines mindestens dreischaligen Schornsteins, bei dem zwischen mindestens einem Rauchgasrohr und einer Stützummantelung eine Wärmedämmschicht, insbesondere aus Mineralwolle, mit etwas Radialspiel, insbesondere mit radialem Abstand zum Rauchgasrohr, angeordnet ist.

73. Anwendung nach Anspruch 72 mit der Maßgabe, daß der Schornstein hinterlüftet ausgebildet ist.

## Claims

1. Kit made of joint packings (8) and individual pipes (2) to produce a joint connection between the individual pipes (2), which are axially complementary to form a flue gas pipe of a multi-shell chimney, having a packing compound which is arranged in the joints (6) and is divided within the joint (6) into at least two radially successive packing components with different packing characteristics, at least one packing component being an amorphous hardening compound (12), characterised by prefabricated joint packings (8) which form at least one resilient packing component and, within the joint (6), a permanent formwork (14) for at least one amorphous packing component (12) of the joint connection, the packing components (8, 12) being designed for temperature resistance in a radially inner region and for moisture-tightness at low temperatures in a radially outer region.

2. Kit according to Claim 1, characterised in that the resilient packing component, formed by the joint packing (8) also forms the permanent formwork (14).

3. Kit according to Claim 1 or 2, characterised in that the packing component formed by the joint packing (8) is provided only on one radial side of the joint (6), preferably the radially outer side.

4. Kit according to Claim 1 or 2, characterised in that the packing component(s) formed by the joint packing (8) is (are) provided on the radially inner and outer sides of the joint (6).

5. Kit according to Claim 3, characterised in that an additional permanent formwork (16) is provided for the other radial side of the joint (6).

6. Kit according to one of Claims 1 to 5, characterised in that the packing component(s) formed by the joint packing (8) and, if appropriate, additional permanent formwork(s) (16) are combined to form a prefabricated element.

7. Kit according to one of Claims 1 to 6, characterised in that the joint packing (8) is constructed as a spacer for the joint height.

8. Kit according to Claim 7, characterised in that packing component(s) formed by the joint packing (8) is (are) provided as resilient spacer.

9. Kit according to one of Claims 1 to 8, characterised in that packing component(s) formed by the joint packing (8) is (are) elastically resilient.

10. Kit according to one of Claims 1 to 9, characterised in that packing component(s) formed by the joint packing (8) is (are) plastically resilient.

11. Kit according to one of Claims 1 to 10, characterised in that the cross-section of the packing component formed by the joint packing (8) is of flat circular shape.

12. Kit according to one of Claims 1 to 11, characterised in that the joint packing (8), preferably a packing component formed by it, projects radially over the joint (6) at least on one side.

13. Kit according to Claim 12, characterised in that the radially projecting part of the packing component formed by the joint packing (8) takes up 40 to 80%, preferably over 50%, of its radial width.

14. Kit according to Claim 12 or 13, characterised in that the radially projecting part of the packing component formed by the joint packing (8) takes up 60 to 80% of its radial width.

15. Kit according to one of Claims 12 to 14, characterised in that the radial width of the joint (6), which is occupied by a packing component arranged only on one side of the joint and formed by the joint packing (8), takes up 10% to 50% of the radial joint width.

16. Kit according to one of Claims 12 to 14, characterised in that the radial width of the joint (6), which is occupied by packing component(s) arranged on both sides of the joint, takes up 10% to 1/3 of the radial joint width.

17. Kit according to one of Claims 12 to 16, characterised in that the radially projecting part of the packing component formed by the joint packing (8) is constructed at least in one axial direction, preferably in both, with an axial projection in relation to the region arranged within the joint (6).

18. Kit according to Claim 17, characterised in that the projection forms a lip seal (26) which comes to rest on the circumference of the respective individual pipe in the installed state.

19. Kit according to Claim 17 or 18, characterised in that the projection forms a centring for the respective individual pipe (2), which centring is axially aligned or preferably widened in the manner of a funnel.

20. Kit according to one of Claims 1 to 11, characterised in that the outside width of the prefabricated joint packing (8) is smaller than or equal to the outside width of the individual pipes (2) and the inside width of the prefabricated joint packing (8) is greater than or equal to the inside width of the individual pipes (2).

21. Kit according to one of Claims 1 to 20, characterised in that the end faces of the individual pipes (2) are constructed with axial set-back portions (20), in which the joint packings (8) engage positively, preferably in a complementary manner.

22. Kit according to Claim 21, characterised in that the axial set-back portions (20) are constructed as circumferential step(s) or annular groove (s) (54).

23. Kit according to Claim 21 or 22, characterised in that the set-back portions (20) are constructed only at one of the two ends of the individual pipes (2).

24. Kit according to one of Claims 21 to 23, characterised in that the set-back portions (20) are constructed identically at both ends of the individual pipes (2).

25. Kit according to one of Claims 21 to 24, characterised in that the set-back portions (20) are constructed as steps only on the inside or preferably the outside of the end face of the individual pipes (2).

26. Kit according to one of Claims 21 to 25, characterised in that the clear cross-section of the set-back portions (21) is rectangular.

27. Kit according to one of Claims 21 to 25, characterised in that the clear cross-section of the set-back portions (20) is rounded.

28. Kit according to one of Claims 21 to 27, characterised in that the radial width of only one set-back portion (20) of one end face takes up 20 to 50%, preferably 20 to 35%, of the wall thickness of the individual pipe (2).

29. Kit according to one of Claims 21 to 27, characterised in that the radial width of two set-back portions (20) on the same end face takes up 20 to 35% of the wall thickness of the individual pipe (2).

30. Kit according to one of Claims 21 to 29, characterised in that the set-back portion (20) has a depth of 3 to 10 mm.

31. Kit according to one of Claims 20 to 30, characterised in that the joint packing (8) forms a packing sleeve with a constant wall thickness (Figs. 7-10, 14 and 15).

32. Kit according to one of Claims 8 to 31, characterised in that the joint packing (8) has an angular cross-section, one limb of which engages in the set-back portion (20), and the other limb (22) of which forms a resilient spacer for the joint height.

33. Kit according to one of Claims 12 to 19 and 21 to 32, characterised in that the joint packing (8), together with its region engaging in one or more set-back portion(s) (20), projects radially over the joint (6).

34. Kit according to Claim 33, characterised in that a region of the joint packing (8) engaging in an outer step (20) of the end face of the individual pipe (2) is adjoined by a sealing lip (26) acting on the outer surface (28) of the individual pipe (2) (Fig. 11).

35. Kit according to one of Claims 1 to 34, characterised in that packing component(s) formed by the joint packing (8) is (are) held by a support corset (25).

36. Kit according to Claim 35, characterised in that the support corset (25) has a bearing body embedded in the respective packing component.

37. Kit according to Claim 34 or 36, characterised in that the support corset (25) has a support structure which passes through the respective packing component.

38. Kit according to Claim 37, characterised in that the support structure (25) has an added fibre matrix.

39. Kit according to one of Claims 35 to 38, characterised in that the support corset (25) is a cover which surrounds the respective packing component and is preferably air-permeable.

40. Kit according to Claim 39, characterised in that the cover is constructed to be permeable for resiliently plastic packing compound arranged in it and penetrable under compression for elastically resilient packing compound arranged in it.

41. Kit according to one of Claims 35 to 40, characterised in that the support corset (25) has a circumferential casing (38, 40) which positively surrounds the radially projecting part of the packing component formed by the joint packing (8).

42. Kit according to Claim 41, characterised in that the circumferential casing (38, 40) is formed by a flat material which is shaped to surround the packing component in the manner of a groove (38).

43. Kit according to Claim 41 or 42, characterised in that the circumferential casing (38, 40) has at least in one axial direction, preferably in both, an axial projection (40) over the packing component (34) supported by it.

44. Kit according to Claim 43, characterised in that the respective axial projection (40) of the circumferential casing (38, 40) is 20 to 50 mm.

45. Kit according to Claim 43 or 44, characterised in that the axial projection of the circumferential casing (38, 40) in the installed state of the individual pipes (2) is constructed as a centring funnel (48).

46. Kit according to one of Claims 43 to 45, characterised in that the axial projection (40) in relation to the outer surface (28) of the respective individual pipe (2) has a radial spacing of 1 to 3% of the outside diameter of the nominal bore of the individual pipe and, if appropriate, widens to a maximum 10% in the centring funnel (48).

47. Kit according to one of Claims 35 to 46, characterised in that the support corset (25) bears an additional permanent formwork (18) for the opposite side of the joint (6).

48. Kit according to one of Claims 5 to 32, characterised in that the additional permanent formwork (16) is formed by a thin-walled sleeve which is about the height of the joint and approximately continues the inside surface (42) of the adjacent individual pipes (2).

49. Kit according to one of Claims 5 to 48, characterised in that the additional permanent formwork (16) is provided with a bearing (46) on the upper end face of the lower joint-forming individual pipe (2).

50. Kit according to one of Claims 1 to 49, characterised in that the additional permanent formwork (16) is connected to the support corset by bearing webs (44) distributed over the circumference.

51. Kit according to one of Claims 1 to 50, characterised in that the packing component formed by the joint packing (8) has a T-shaped cross-section, preferably is shaped in total in a T-shape.

52. Kit according to one of Claims 1 to 51, characterised in that the packing component formed by the joint packing (8) forms a flat packing projecting into the joint, with an axial and radial projection which is rounded in an upward and downward elongate manner, preferably shaped correspondingly in total.

53. Kit according to Claim 52, characterised in that the axial and radial projection is constructed with a similarly shaped core as support corset (25).

54. Kit according to one of Claims 1 to 53, characterised in that the packing component(s) formed by the joint packing (8) form two annular packings - preferably with a circular cross-section (34) - which can be arranged on the outside and inside of the joint (6) and are connected to one another by webs (36), distributed over the circumference, or are provided in multiple parts.

55. Kit according to one of Claims 1 to 54, characterised by construction of the joint packing (8) with a radial spacer (50) between the flue gas pipe (2) and an outer shell following with radial spacing, preferably the casing (10) of a two-shell chimney.

56. Kit according to one of Claims 1 to 55, characterised in that a packing component formed by the joint packing (8) is formed by a packing cord made of mineral or ceramic fibres.

57. Kit according to one of Claims 1 to 56, characterised in that a packing component formed by the joint packing (8) is formed by a rubber-elastic strip based on natural caoutchouc or synthetic material.

58. Kit according to one of Claims 1 to 57, characterised in that a packing component formed by the joint packing (8) is formed by a plastically resilient strip based on natural caoutchouc or synthetic material, preferably based on a copolymer of isobutylene with a small percentage of diene, preferably butadiene.

59. Kit according to Claim 58, characterised in that the strip is provided with mineral packing materials, preferably containing silicate.

60. Kit according to one of Claims 1 to 59, characterised in that a packing component formed by the joint packing (8) is provided with an additive or consists of a material which combines chemically with the material of the individual pipes when an activator is added.

61. Kit according to Claim 60, characterised in that the additive or the material is an acid-resistant mastic and the activator is water or water glass.

62. Kit according to Claim 60 or 61, characterised in that the material as powder or granulate is held by a permeable cover - preferably a fabric, woven or knitted material.

63. Kit according to one of Claims 35 to 62, characterised in that the support corset (25) consists of metal, preferably stainless steel or aluminium, plastic, preferably polytetrafluoroethylene, or carbon, ceramic or mineral fibre material.

64. Kit according to one of Claims 1 to 63, characterised in that the individual pipes (2) are of single-shell and/or thin walled construction, preferably made of fire clay, ceramic, glass or lightweight concrete.

65. Kit according to one of Claims 1 to 64, characterised in that the individual pipes (2) each have a length of more than 75 cm, preferably about 1 m.

66. Kit according to one of Claims 20 or 33 to 65, characterised in that the joint-forming end faces of the individual pipes (2) are of blunt construction.

67. Kit according to one of Claims 1 to 66 with the provision that the end faces of the individual pipes (2) are of bent, preferably sloped, construction on the side where they interact with a packing component constructed on the joint packing (8).

68. Use of a kit according to one of Claims 1 to 67 for the rehabilitation of chimneys by new insertion of flue gas pipes.

69. Use of a kit according to one of Claims 1 to 67 or use according to Claim 68 in the case of insertion of an individual pipe (2) into a casing (10) of the flue gas pipe which is already of higher construction.

70. Use of a kit according to one of Claims 1 to 67 or use according to Claim 68 or 69 for the production of a two-shell chimney made of the flue gas pipe (2) and a casing (10), arranged with spacing from the latter, with a thermal resistance of the chimney of less than 0.65 m²K/W.

71. Use of a kit according to one of Claims 1 to 67 or use according to one of Claims 68 to 70 for an acid-resistant joint mortar, arranged radially on the inside in the joint (6), as an amorphous packing compound (12).

72. Use of a kit according to one of Claims 1 to 67 or use according to one of Claims 68, 69 or 71 for the production of an at least three-shell chimney, in which a thermal insulation layer, in particular made of mineral wool, is arranged between at least one flue gas pipe and one support casing with slight radial clearance, in particular with radial spacing from the flue gas pipe.

73. Use according to Claim 72 with the provision that the chimney is constructed with rear ventilation.

**Revendications**

1. Ensemble ou lot de construction composé de garnitures de joints (8) et de tubes individuels (2), pour réaliser la jonction au droit des joints entre les tubes individuels (2), se complétant dans le sens axial en un tuyau de fumée d'un conduit de fumée à plusieurs parois, avec un produit de jointement disposé dans les joints (6) et qui est divisé à l'intérieur du joint (6) en au moins deux composants de jointement qui se suivent radialement et ont des propriétés de jointement différentes, au moins un composant de jointement étant un produit amorphe durcissable (12), caractérisé par des garnitures de joints préfabriquées (8) qui forment au moins un composant de jointement souple et, à l'intérieur du joint (6), un coffrage perdu (14) pour au moins un composant de jointement amorphe (12) de la jonction au droit du joint, les composants de jointement (8, 12) étant conçus pour résister à la température dans une zone située radialement à l'intérieur et pour être étanches à l'humidité à basses températures dans une zone située radialement à l'extérieur.

2. Lot de construction selon la revendication 1, caractérisé en ce que le composant de jointement souple formé par la garniture de joint (8), constitue en même temps le coffrage perdu (14).

3. Lot de construction selon la revendication 1 ou 2, caractérisé en ce que le composant de jointement formé par la garniture de joint (8), est prévu seulement sur un côté radial du joint (6), de préférence sur le côté radialement extérieur.

4. Lot de construction selon la revendication 1 ou 2, caractérisé en ce que le ou les composant(s) de jointement formé(s) par la garniture de joint (8) est ou sont prévu(s) sur le côté radialement intérieur et le côté radialement extérieur du joint (6).

5. Lot de construction selon la revendication 3, caractérisé en ce qu'un coffrage perdu supplémentaire (16) est prévu pour l'autre côté radial du joint (6).

6. Lot de construction selon une des revendications 1 à 5, caractérisé en ce que le ou les composant(s) formé(s) par la garniture de joint (8) et, éventuellement, un ou plusieurs coffrage(s) perdu(s) supplémentaires (16), sont rassemblés en une pièce de construction préfabriquée.

7. Lot de construction selon une des revendications 1 à 6, caractérisé en ce que la garniture de joint (8) est réalisée comme une entretoise pour la hauteur du joint.

8. Lot de construction selon la revendication 7, caractérisé en ce qu'un ou plusieurs composant(s) de jointement formé(s) par la garniture de joint (8), est ou sont prévu(s) comme pièce d'écartement souple.

9. Lot de construction selon une des revendications 1 à 8, caractérisé en ce qu'un ou plusieurs composant(s) de jointement formé(s) par la garniture de joint (8) est ou sont souple(s)-élastique(s).

10. Lot de construction selon une des revendications 1 à 9, caractérisé en ce qu'un ou plusieurs composant(s) de jointement formé(s) par la garniture de joint (8) est ou sont souple(s)-plastique(s).

11. Lot de construction selon une des revendications 1 à 10, caractérisé en ce que la section droite du composant de jointement formé par la garniture de joint (8) a la forme d'une aire circulaire.

12. Lot de construction selon une des revendications 1 à 11, caractérisé en ce que la garniture de joint (8), de préférence un composant de jointement formé par elle, fait radialement saillie du joint (6) sur au moins un côté.

13. Lot de construction selon la revendication 12, caractérisé en ce que la partie radialement saillante du composant de jointement formé par la garniture de joint (8) représente 40 à 80 %, de préférence plus de 50 % de sa largeur radiale.

14. Lot de construction selon la revendication 12 ou 13, caractérisé en ce que la partie radialement saillante du composant de jointement formé par la garniture de joint (8) représente 60 à 80 % de sa largeur radiale.

15. Lot de construction selon une des revendications 12 à 14, caractérisé en ce que la largeur radiale du joint (6) occupée par un composant de joint disposé seulement d'un côté du joint et formé par la garniture de joint (8), représente 10 à 50 % de la largeur radiale du joint.

16. Lot de construction selon une des revendications 12 à 14, caractérisé en ce que la largeur radiale du joint (6) occupée par un ou plusieurs composant(s) de jointement disposé(s) des deux côtés du joint, représente 10 % à 1/3 de la largeur radiale du joint.

17. Lot de construction selon une des revendications 12 à 16, caractérisé en ce que la partie radialement saillante du composant de jointement formé par la garniture de joint (8), est réalisée en au moins une direction axiale, de préférence dans les deux, avec une saillie axiale par rapport à la zone disposée à l'intérieur du joint (6).

18. Lot de construction selon la revendication 17, caractérisé en ce que la saillie forme une lèvre d'étanchéité (26) s'appliquant à l'état monté contre la surface périphérique du tube individuel concerné.

19. Lot de construction selon la revendication 17 ou 18, caractérisé en ce que la saillie forme un élément de centrage orienté axialement ou s'élargissant de préférence en entonnoir pour le tube individuel (2) concerné.

20. Lot de construction selon une des revendications 1 à 11, caractérisé en ce que la largeur extérieure de la garniture de joint préfabriquée (8) est inférieure ou égale à la largeur extérieure des tubes individuels (2) et la largeur intérieure de la garniture de joint préfabriquée (8) est supérieure ou égale à la largeur intérieure des tubes individuels (2).

21. Lot de construction selon une des revendications 1 à 20, caractérisé en ce que les faces extrêmes des tubes individuels (2) sont réalisées avec des retraits axiaux (20) dans lesquels les garnitures de joints (8) pénètrent avec imbrication de formes, de préférence de façon complémentaire.

22. Lot de construction selon la revendication 21, caractérisé en ce que les retraits axiaux (20) sont réalisés comme un ou plusieurs gradin(s) ou comme une ou plusieurs gorge(s) annulaire(s) (54).

23. Lot de construction selon la revendication 21 ou 22, caractérisé en ce que les retraits (20) sont réalisés seulement sur l'une des deux extrémités des tubes individuels (2).

24. Lot de construction selon une des revendications 21 à 23, caractérisé en ce que les retraits (20) sont réalisés de façon identique sur les deux extrémités des tubes individuels (2).

25. Lot de construction selon une des revendications 21 à 24, caractérisé en ce que les retraits (20) sont réalisés, comme des gradins, seulement sur le côté intérieur ou, de préférence, seulement sur le côté extérieur de la face extrême des tubes individuels (2).

26. Lot de construction selon une des revendications 21 à 25, caractérisé en ce que la section droite intérieure des retraits (20) est rectangulaire.

27. Lot de construction selon une des revendications 21 à 25, caractérisé en ce que la section droite intérieure des retraits (20) est arrondie.

28. Lot de construction selon une des revendications 21 à 27, caractérisé en ce que largeur radiale de seulement un retrait (20) d'une face extrême représente 20 à 50 %, de préférence 20 à 35 % de l'épaisseur de paroi du tube individuel (2).

29. Lot de construction selon une des revendications 21 à 27, caractérisé en ce que la largeur radiale de deux retraits (20) sur la même face extrême, représente 20 à 35 % de l'épaisseur de paroi du tube individuel (2).

30. Lot de construction selon une des revendications 21 à 29, caractérisé en ce que le retrait (20) possède une profondeur de 3 à 10 mm.

31. Lot de construction selon une des revendications 20 à 30, caractérisé en ce que la garniture de joint (8) forme un manchon d'étanchéité ayant une épaisseur de paroi constante (Fig. 7 - 10, 14 et 15).

32. Lot de construction selon une des revendications 8 à 31, caractérisé en ce que la garniture de joint (8) possède une section droite angulaire (en équerre) dont une branche pénètre dans le retrait (20) et dont l'autre branche (22) forme une entretoise souple pour la hauteur de joint.

33. Lot de construction selon une des revendications 12 à 19 et 21 à 32, caractérisé en ce que la garniture de joint (8), y compris sa partie pénétrant dans un ou plusieurs retrait(s) (20), fait radialement saillie du joint (6).

34. Lot de construction selon la revendication 33, caractérisé en ce qu'une lèvre d'étanchéité (26), appliquée contre la surface externe (28) du tube individuel (2), se raccorde à une partie de la garniture de joint (8) pénétrant dans un gradin extérieur (20) de la face extrême du tube individuel (2) (Fig. 11).

35. Lot de construction selon une des revendications 1 à 34, caractérisé en ce qu'un ou plusieurs composant(s) de jointement formé(s) par la garniture de joint (8) est ou sont maintenu(s) par un corset de soutien (25).

36. Lot de construction selon la revendication 35, caractérisé en ce que le corset de soutien (25) comporte un élément porteur noyé dans le composant de jointement concerné.

37. Lot de construction selon la revendication 34 ou 36, caractérisé en ce que le corset de soutien (25) présente une structure de soutien qui traverse le composant de jointement concerné.

38. Lot de construction selon la revendication 37, caractérisé en ce que la structure de soutien (25) présente une matrice de fibres ajoutée à elle par mélange.

EP 0 353 663 B1

39. Lot de construction selon une des revendications 35 à 38, caractérisé en ce que le corset de soutien (25) est une enveloppe entourant le composant de jointement concerné, de préférence une enveloppe perméable à l'air.

40. Lot de construction selon la revendication 39, caractérisé en ce que l'enveloppe est rendue perméable pour un produit d'étanchéité souple-plastique disposé à l'intérieur d'elle, ou est réalisée de manière qu'elle puisse être traversée par un produit d'étanchéité souple-élastique disposé à l'intérieur d'elle lorsque le produit est soumis à une compression.

41. Lot de construction selon une des revendications 35 à 40, caractérisé en ce que le corset de soutien (25) comporte un recouvrement périphérique (38, 40) entourant à complémentarité de formes la partie radialement saillante du composant de jointement formé par la garniture de joint (8).

42. Lot de construction selon la revendication 41, caractérisé en ce que le recouvrement périphérique (38, 40) est constitué par un matériau plat qui entoure le composant de jointement à la façon d'une gorge (38).

43. Lot de construction selon la revendication 41 ou 42, caractérisé en ce que le recouvrement périphérique (38, 40) présente dans au moins une direction axiale et de préférence dans les deux, une saillie axiale (40) par rapport au composant de jointement (34) soutenu par lui.

44. Lot de construction selon la revendication 43, caractérisé en ce que la saillie axiale (40) du recouvrement périphérique (38, 40) mesure 20 à 50 mm.

45. Lot de construction selon la revendication 43 ou 44, caractérisé en ce que la saillie axiale du recouvrement périphérique (38, 40) est réalisée pour constituer un entonnoir de centrage (48) à l'état monté des tubes individuels (2).

46. Lot de construction selon une des revendications 43 à 45, caractérisé en ce que la saillie axiale (40) présente, par rapport à la surface externe (28) du tube individuel (2) concerné, un espacement radial correspondant à 1 - 3 % du diamètre extérieur nominal du tube individuel et s'élargit éventuellement jusqu'à présenter un espacement correspondant tout au plus à 10 % dans l'entonnoir de centrage (48).

47. Lot de construction selon une des revendications 35 à 46, caractérisé en ce que le corset de soutien (25) porte un coffrage perdu supplémentaire (16) pour le côté opposé du joint (6).

48. Lot de construction selon une des revendications 5 à 32, caractérisé en ce que le coffrage perdu supplémentaire (16) est formé par un manchon de faible épaisseur de paroi, ayant à peu près la hauteur du joint et prolongeant approximativement la surface interne (42) des tubes individuels (2) voisins.

49. Lot de construction selon une des revendications 5 à 48, caractérisé en ce que le coffrage perdu supplémentaire (16) est pourvu d'un appui (46) pour s'appliquer contre la face extrême supérieure du tube individuel (2) délimitant le côté inférieur du joint.

50. Lot de construction selon une des revendications 1 à 49, caractérisé en ce que le coffrage perdu supplémentaire (16) est relié au corset de soutien par des barrettes de support (44) réparties circonférentiellement.

51. Lot de construction selon une des revendications 1 à 50, caractérisé en ce que le composant de jointement formé par la garniture de joint (8) possède une section droite en T et est de préférence réalisé dans son ensemble en forme de T.

52. Lot de construction selon une des revendications 1 à 51, caractérisé en ce que le composant de jointement formé par la garniture de joint (8) constitue un élément d'étanchéité plat pénétrant dans le joint, avec une saillie axiale et radiale arrondie, ayant une forme allongée vers le haut et vers le bas, le composant de jointement étant de préférence conformé ainsi dans son ensemble.

53. Lot de construction selon la revendication 52, caractérisé en ce que la saillie axiale et radiale est réalisée avec un noyau ayant une forme analogue et servant de corset de soutien (25).

54. Lot de construction selon une des revendications 1 à 53, caractérisé en ce que le ou les composant(s) formé(s) par la garniture de joint (8) constitue(nt) deux éléments d'étanchéité annulaires, pouvant être disposés sur le côté extérieur et le côté intérieur du joint (6), éléments qui ont de préférence une section droite (34) semblable à une section circulaire, et sont reliés ensemble par des entretoises (36) réparties circonférentiellement, ou sont prévues en plusieurs parties.

55. Lot de construction selon une des revendications 1 à 54, caractérisé par la réalisation de la garniture du joint (8) avec une entretoise radiale (50) entre le tuyau de fumée (2) et une paroi extérieure qui lui fait suite à distance radiale, de préférence l'habillage (10) d'un conduit de fumée à deux parois.

56. Lot de construction selon une des revendications 1 à 55, caractérisé en ce qu'un composant de jointement formé par la garniture de joint (8) est constitué par un cordon d'étanchéité en fibres minérales ou céramiques.

57. Lot de construction selon une des revendications 1 à 56, caractérisé en ce qu'un composant de jointement formé par la garniture de joint (8) est constitué par un bourrelet doué d'élasticité caoutchoutique, à base de caoutchouc naturel ou de matière plastique.

58. Lot de construction selon une des revendications 1 à 57, caractérisé en ce qu'un composant de join-

24

tement formé par la garniture de joint (8) est constitué par un boudin souple-plastique, à base de caoutchouc naturel ou de matière plastique, de préférence sur la base d'un copolymère d'isobutylène avec une petite fraction, en pourcentage, de diène, de préférence de butadiène.

59. Lot de construction selon la revendication 58, caractérisé en ce que le bourrelet est pourvu de matières de remplissage minérales, contenant de préférence des silicates.

60. Lot de construction selon une des revendications 1 à 59, caractérisé en ce qu'un composant de jointement formé par la garniture de joint (8) est pourvu d'une addition ou est constitué d'un matériau établissant une combinaison chimique avec le matériau des tubes individuels lorsqu'on ajoute un activateur.

61. Lot de construction selon la revendication 60, caractérisé que l'addition ou le matériau est un ciment résistant aux acides et l'activateur est de l'eau ou du verre soluble.

62. Lot de construction selon la revendication 60 ou 61, caractérisé en ce que le matériau, se présentant sous la forme d'une poudre ou d'un granulé, est maintenu par une enveloppe perméable, de préférence un tissu, un tissu à mailles ou un tricot.

63. Lot de construction selon une des revendications 35 à 62, caractérisé en ce que le corset de soutien (25) est en métal, de préférence en acier inoxydable ou aluminium, en matière plastique, de préférence en polytétrafluoroéthylène, ou en un matériau à fibres de carbone, fibres céramiques ou fibres minérales.

64. Lot de construction selon une des revendications 1 à 63, caractérisé en ce que les tubes individuels (2) sont réalisés à simple paroi et/ou à paroi mince, de préférence en chamotte, terre cuite, verre ou béton léger.

65. Lot de construction selon une des revendications 1 à 64, caractérisé en ce que les tubes individuels (2) ont chacun une longueur de plus de 75 cm, de préférence une longueur d'environ 1 m.

66. Lot de construction selon une des revendications 20 ou 33 à 65, caractérisé en ce que les faces extrêmes formant les joints des tubes individuels (2) sont des faces aboutées droites.

67. Lot de construction selon une des revendications 1 à 66 dans la mesure où les faces extrêmes des tubes individuels (2) possèdent des arêtes coupées et sont de préférence biseautées du côté où elles coopèrent avec un composant de jointement formé sur la garniture de joint (8).

68. Application d'un lot de construction selon une des revendications 1 à 67 pour la rénovation de conduits de fumée par la mise en place de nouveaux tuyaux de fumée.

69. Application d'un lot de construction selon une des revendications 1 à 67 ou application selon la revendication 68 à l'introduction d'un tube individuel (2) dans un habillage (10) érigé déjà à une hauteur supérieure du tuyau de fumée.

70. Application d'un lot de construction selon une des revendications 1 à 67 ou application selon la revendication 68 ou 69 à la construction d'un conduit de fumée à double paroi, constitué du tuyau de fumée (2) et d'un habillage (10) placé à distance de ce tuyau, pour la réalisation d'un conduit de fumée dont la résistance au passage de chaleur est inférieure à 0,65 m² K/W.

71. Application d'un lot de construction selon une des revendications 1 à 67 ou application selon une des revendications 68 à 70 avec utilisation, en tant que produit de jointement amorphe (12), d'un mortier pour joints résistant aux acides, qui est disposé radialement à l'intérieur du joint (6).

72. Application d'un lot de construction selon une des revendications 1 à 67 ou application selon une des revendications 68, 69 ou 71 à la construction d'un conduit de fumée qui est au moins à triple paroi, comprenant, entre au moins un tuyau de fumée et un habillage de support, une couche de calorifugeage, en particulier en laine minérale, qui est disposée avec un faible jeu radial, en particulier à distance radiale par rapport au tuyau de fumée.

73. Application selon la revendication 72 dans la mesure où le conduit de fumée est réalisé avec un aérage intermédiaire.

FIG.1

FIG.2

FIG.3

FIG.4

FIG.5a

FIG.5

FIG. 7          FIG. 8

FIG. 9          FIG. 10

FIG.11

FIG.12

FIG.13

FIG.14

EP 0 353 663 B1

FIG.15

30

FIG. 6

FIG. 16